# EUROPEAN PATENT APPLICATION

(11) **EP 4 366 298 A1**
(43) Date of publication of application: **08.05.2024**
(21) Application number: 22831498.5
(22) Date of filing: 18.05.2022
(51) Int. Cl.: H04N 7/18, G09G 5/14, H04N 5/268

(54) **METHOD AND APPARATUS FOR CONTROLLING DISPLAY SCREEN**

(30) Priority: 29.06.2021 CN 202110729583
(71) Applicant: Hangzhou Hikvision Digital Technology Co., Ltd., Hangzhou, Zhejiang 310051 (CN)
(72) Inventor: FANG, Zhenhuan, Hangzhou, Zhejiang 310051 (CN); HAO, Xianyi, Hangzhou, Zhejiang 310051 (CN); LEI, Weijun, Hangzhou, Zhejiang 310051 (CN); ZHAO, Dongdong, Hangzhou, Zhejiang 310051 (CN); YANG, Fan, Hangzhou, Zhejiang 310051 (CN); LI, Ruiming, Hangzhou, Zhejiang 310051 (CN); QIAN, Yuhuan, Hangzhou, Zhejiang 310051 (CN); SHEN, Zihao, Hangzhou, Zhejiang 310051 (CN); GAO, Liang, Hangzhou, Zhejiang 310051 (CN); WANG, Nan, Hangzhou, Zhejiang 310051 (CN); QIU, Jingying, Hangzhou, Zhejiang 310051 (CN)
(74) Representative: Epping - Hermann - Fischer
(86) International application number: PCT/CN2022/093554
(87) International publication number: WO 2023/273672

(57) **Abstract**

A method and apparatus for controlling a display screen are provided, belonging to the field of electronic technology. The method includes: receiving a target alarm message, wherein the target alarm message is linked with an image captured in real time by at least one monitoring point (301); determining, based on display states of a plurality of display windows in a display screen, a target window that supports displaying the image linked with the target alarm message among the plurality of display windows, wherein the target window includes at least one of the display windows (302); and controlling the display screen to display in the target window the image captured in real time by the at least one monitoring point (303). The above method and apparatus solve the problems that the process of displaying the image captured by each monitoring point linked with the alarm message is complicated and the display flexibility is low; and are for displaying the image captured by each monitoring point linked with the alarm message.

## Description

The present application claims the priority to a Chinese patent application No. 202110729583.1 filed with the China National Intellectual Property Administration on June 29, 2021 and entitled "METHOD AND APPARATUS FOR CONTROLLING DISPLAY SCREEN", which is incorporated herein by reference in its entirety.

### Technical field

The present application relates to the field of electronic technology, and in particular relates to a method and apparatus for controlling a display screen.

### Background

With the development of electronic technology, larger-sized display screens (such as splicing screens) are widely used in video monitoring to simultaneously display images captured at multiple monitoring points.

In related art, a video monitoring system may include: a plurality of monitoring points, a management device, and a display screen. When the monitoring points determine, based on the captured images, that events that need to be alarmed have occurred in the environment monitored by the monitoring points, the monitoring points may send alarm messages corresponding to the events to the management device. Each alarm message may be linked with multiple monitoring points, and after receiving the alarm message, the management device may control the display screen to display images captured in real time by individual monitoring point linked with the alarm message. Workers need to pre-configure alarm profiles corresponding to various alarm messages, the alarm profiles are equivalent to display templates of images. Each alarm profile is used to indicate display positions in the display screen for the images captured by each of the monitoring points linked with the alarm message, and each of the display positions indicated by each alarm profile is fixed, and the image display effect corresponding to the alarm profile is also fixed.

Since the process of setting up the alarm profiles by the staff is quite cumbersome, the process of displaying images captured by various monitoring points linked with the alarm message in the relevant technology is complicated and the display flexibility is lower.

### Summary

The present application provides a method and apparatus for controlling a display screen, which can solve the problem that the process of displaying images captured by various monitoring points linked with an alarm message is complicated and the display flexibility is lower. The technical solutions are as follows.

In a first aspect, a method of controlling a display screen is provided, including:
receiving a target alarm message, wherein the target alarm message is linked with an image captured in real time by at least one monitoring point;
determining, based on display states of a plurality of display windows in the display screen, a target window that supports displaying the image linked with the target alarm message among the plurality of display windows, wherein the target window includes at least one of the display windows; and
controlling the display screen to display in the target window the image captured in real time by the at least one monitoring point.

Alternatively, the determining, based on display states of a plurality of display windows in the display screen, a target window that supports displaying the image linked with the target alarm message among the plurality of display windows, includes:
when there are display windows in which no image is displayed among the plurality of display windows, determining the target window among the display windows in which no image is displayed.

Alternatively, the determining, based on display states of a plurality of display windows in the display screen, a target window that supports displaying the image linked with the target alarm message among the plurality of display windows, includes:
when the plurality of display windows are all displaying images and there are display windows in which displayed images are not linked with any alarm message among the plurality of display windows, determining the target window among the display windows in which displayed images are not linked with any alarm message.

Alternatively, the determining, based on display states of a plurality of display windows in the display screen, a target window that supports displaying the image linked with the target alarm message among the plurality of display windows, includes:
when the plurality of display windows are all displaying images and images displayed in the plurality of display windows are all linked with alarm messages, detecting whether there are display windows whose corresponding auxiliary number is less than a number threshold among the plurality of display windows, wherein the auxiliary number is the number of alarm messages linked with an image displayed in a display window;
when there are the display windows whose corresponding auxiliary number is less than the number threshold among the plurality of display windows, determining the target window among the display windows whose corresponding auxiliary number is less than the number threshold.

Alternatively, the auxiliary number is n, and the controlling the display screen to display in the target window the image captured in real time by the at least one monitoring point, includes:
dividing the target window into m sub-windows based on the auxiliary number, wherein 2 <, n + 1 <, m, and m is less than or equal to the number threshold; and
controlling the display screen to display images linked with the auxiliary number of alarm messages and the image linked with the target alarm message in n+1 of the m sub-windows, respectively.

Alternatively, the controlling the display screen to display images linked with the auxiliary number of alarm messages and the image linked with the target alarm message in n+1 of the m sub-windows, respectively, includes:
when there is any alarm message linked with images captured in real time by a plurality of monitoring points in the auxiliary number of alarm messages and the target alarm message, controlling the display screen to display the images captured in real time by the plurality of monitoring points in turn in a sub-window corresponding to the any alarm message.

Alternatively, the method further includes:
in case any window of the display screen includes a plurality of sub-windows for respectively displaying images linked with a plurality of alarm messages, and after an unfolding instruction for any alarm message of the plurality of alarm messages is received, controlling the display screen to suspend an auxiliary window in the any window, wherein the auxiliary window has an area larger than that of sub-windows for displaying images linked with the any alarm message; wherein the any window includes at least one of the display windows, the any alarm message is linked with images captured in real time by b monitoring points, and the auxiliary window includes a sub-windows, 1≤b≤a;
controlling the display screen to display the images captured in real time by the b monitoring points in b sub-windows of the a sub-windows, respectively.

Alternatively, after the controlling the display screen to display the images captured in real time by the b monitoring points in b sub-windows of the a sub-windows, respectively, the method further includes:
after receiving a folding instruction for the any alarm message, controlling the display screen to stop displaying the auxiliary window, so as to restore displaying the images linked with the plurality of alarm messages in the plurality of sub-windows in the any window, respectively.

Alternatively, each of the alarm messages has a corresponding priority level; and the determining, based on display states of a plurality of display windows in the display screen, a target window that supports displaying the image linked with the target alarm message among the plurality of display windows, further includes:
when the auxiliary number corresponding to each of the plurality of display windows is equal to the number threshold, detecting whether there are display windows that satisfy a target condition among the plurality of display windows, wherein the target condition includes a priority level corresponding to an alarm message linked with a displayed image being less than or equal to a priority level corresponding to the target alarm message;
when there are display windows that satisfy the target condition among the plurality of display windows, determining the target window among the display windows that satisfy the target condition.

Alternatively, the controlling the display screen to display in the target window the image captured in real time by the at least one monitoring point, includes:
controlling the display screen to display the image captured in real time by the at least one monitoring point in a region, for displaying an auxiliary image, of the target window; wherein a priority level corresponding to an alarm message linked with the auxiliary image is less than or equal to the priority level corresponding to the target alarm message.

Alternatively, the determining, based on display states of a plurality of display windows in the display screen, a target window that supports displaying the image linked with the target alarm message among the plurality of display windows, includes:
when there is a locked display window among the plurality of display windows, determining the target window among display windows other than the locked display window, wherein an image source of an image displayed in the locked display window is prohibited from being changed.

Alternatively, the determining, based on display states of a plurality of display windows in the display screen, a target window that supports displaying the image linked with the target alarm message among the plurality of display windows, includes:
when a window, that supports displaying the image linked with the target alarm message, of the plurality of display windows includes a splicing window, determining the splicing window as the target window, wherein the splicing window consists of a plurality of adjacent display windows.

Alternatively, the determining, based on display states of a plurality of display windows in the display screen, a target window that supports displaying the image linked with the target alarm message among the plurality of display windows, includes:
determining an detection order of the plurality of display windows;
sequentially detecting, in the detection order, whether each of the plurality of display windows supports displaying the image linked with the target alarm message;
after determining that any of the display windows supports displaying the image linked with the target alarm message, determining the any of the display windows as the target window and stopping detecting display windows after the any of the display windows.

Alternatively, the controlling the display screen to display in the target window the image captured in real time by the at least one monitoring point, includes:
dividing the target window into a plurality of sub-windows, wherein the number of the sub-windows is greater than or equal to the number of the at least one monitoring point; and
controlling the display screen to display the image captured in real time by the at least one monitoring point in at least one of the plurality of sub-windows, respectively.

Alternatively, the method further includes:
obtaining a dwell duration corresponding to the target alarm message,
controlling the display screen to stop displaying the image captured in real time by the at least one monitoring point after a display duration of the image captured in real time by the at least one monitoring point reaches the dwell duration.

Alternatively, the method further includes:
controlling the display screen to display a blinking border in a display area of the image captured in real time by the at least one monitoring point during displaying of the image captured in real time by the at least one monitoring point.

Alternatively, the display screen is a splicing screen which is formed by splicing a plurality of liquid crystal screens, and the method further includes: taking a display area of each liquid crystal screen in the plurality of liquid crystal screens as one of the display windows;
or, the display screen consists of at least one light emitting diode screen, and the method further includes: obtaining a window division template; dividing the display into a plurality of display windows based on the window division template.

In the other aspect, a control apparatus for a display screen is provided, which includes:
a receiving module, configured for receiving a target alarm message, wherein the target alarm message is linked with an image captured in real time by at least one monitoring point;
a first determining module, configured for determining, based on display states of a plurality of display windows in the display screen, a target window that supports displaying the image linked with the target alarm message among the plurality of display windows, wherein the target window includes at least one of the display windows; and
a first control module, configured for controlling the display screen to display in the target window the image captured in real time by the at least one monitoring point.

In a further aspect, a control apparatus for a display screen is provided, including a processor and a memory, wherein the memory has at least one instruction stored therein, and the at least one instruction, when executed by the processor, implements the above method for controlling a display screen.

In yet another aspect, a computer-readable storage medium is provided, having at least one instruction stored therein, wherein the at least one instruction, when executed, implements the above method for controlling a display screen.

In yet another aspect, a computer program product is provided, wherein the computer program product, when run on a computer, causes the computer to implement the above method for controlling a display screen.

In yet another aspect, a chip is provided, including programmable logic circuits and/or program instructions, wherein when the chip runs, it implements the method for controlling a display screen.

The beneficial effects of the technical solutions provided by the present application include at least:
In the present application, after receiving the alarm message, the control apparatus can determine the target window for displaying images captured by monitoring points linked with the alarm message based on the current usage of each display window in the display screen. In this way, it is not necessary for the staff to pre-configure alarm profiles corresponding to various alarm messages, to determine the display location of the images captured by each monitoring point, which simplifies the process of displaying the images captured by the monitoring points linked with the alarm message, and further, since the display position of the image captured by each monitoring point is not fixed, the display flexibility is improved.

### Brief Description of the Drawings

FIG. 1 is a schematic structure diagram of a display screen provided by an embodiment of the present application;
FIG. 2 is a schematic structure diagram of a monitoring system provided by an embodiment of the present application;
FIG. 3 is a flowchart of a method for controlling a display screen provided by an embodiment of the present application;
FIG. 4 is a flowchart of another method for controlling a display screen provided by an embodiment of the present application;
FIG. 5 is a schematic structure diagram of another display screen provided by an embodiment of the present application;
FIG. 6 is a diagram of a display state change process of a display screen provided by an embodiment of the present application;
FIG. 7 is a schematic diagram of a display interface of a management terminal provided by an embodiment of the present application;
FIG. 8 is a flowchart of a further method for a controlling a display screen provided by an embodiment of the present application;
FIG. 9 is a schematic structure diagram an apparatus for controlling display screen provided by an embodiment of the present application;
FIG. 10 is a structural block diagram of an apparatus for controlling a display screen provided by an embodiment of the present application.

### Detailed Description

In order to make the principles, technical solutions and advantages of the present application clearer, embodiments of the present application will be described further in detail below in conjunction with the accompanying drawings.

At present, the requirements for people's safety and security are becoming increasingly high, and in turn, monitoring devices (such as monitoring cameras) are being more and more widely used. For example, traffic sections, shopping malls, neighborhoods, and buildings, etc. are all covered with the monitoring devices, which can capture images within the range of the monitoring devices. The manager of the monitoring devices can obtain the images captured by the monitoring devices and perform corresponding operations based on the images. Taking a traffic section as an example, each monitoring device arranged on the traffic section is managed by a traffic management platform; each monitoring device can be connected to the traffic management platform, and each monitoring device can upload the captured images to the traffic management platform so as to display the received images at the traffic management platform. Staff at the traffic management platform may control the monitoring devices or perform other operations based on the images. Exemplarily, a display screen with a larger size, which may also be referred to as a large screen or a TV wall, may be provided at the traffic management platform for displaying images captured by a plurality of monitoring devices at the same time. The process of the display screen presenting images captured by each monitoring device in real time may also be referred to as the process of previewing the images.

It should be noted that the monitoring device may be referred to as a monitoring point in the Internet of Things. This larger display screen in the embodiments of the present application may include only one display screen in a one-piece structure, or may also be a splicing screen, i.e., is formed by splicing a plurality of smaller display screens. In the following embodiments of the present application, as an example, the larger display screen is a splicing screen. The splicing screen can be a whole display wall formed by splicing a plurality of smaller display screens, usually by splicing liquid crystal display (LCD) screens or light emitting diode (LED) displays. In this application, the liquid crystal screens are the LCD screens, and the light emitting diode screens are also the LED display screens. The TV wall formed by splicing the LCD screens can be called a LCD wall, and the TV wall formed by splicing the LED display screens can be called the LED wall. The LED display screen consists of a plurality of light emitting diodes, and the border at the splicing position in the splicing screen formed by using the LED display screens is narrow, which can be more favorable for the image display effect of the splicing screen. Alternatively, the splicing screen can also be formed by splicing organic light emitting diode (Organic Light Emitting Diode, OLED) display screens or other display screens, which is not limited by the embodiments of the present application.

The display screen may include a plurality of display windows, each of which may be used to independently display a different screen. Each display window is a layer area in the display screen for image rendering display. Alternatively, the display screen has fixed windows and a splicing window. The fixed windows are initial display windows in the display screen. The display screen can be set so that a plurality of adjacent fixed windows are combined as a larger display window for displaying screen, and the display window obtained by combining the plurality of fixed windows is the splicing window. For the LCD wall, since that each LCD screen, which is spliced to obtain the LCD wall, needs to be individually controlled by a corresponding control unit, a display area of each LCD screen is regarded as a fixed window. For the LED wall, individual LED screens of which can be directly controlled as a whole by the same control unit, and the LED wall is equivalent to a complete display screen, so the fixed windows in the LED wall cannot be limited by the physical LED display screens during splicing. For example, customized or pre-set window division templates can be used to divide the fixed windows of the LED wall, and for the same LED wall, if different window division templates are used, different fixed windows can be obtained. After dividing the fixed windows, the staff can then set the display screen to combine the multiple fixed windows into the splicing window. Exemplarily, the LED wall may include strip display windows on the left side, the right side, and the upper side extending along the border of the LED wall, and a plurality of square display windows arrayed in an array in the middle region. For example, scrolling subtitles may be displayed in the display windows on the left side, the right side, and the upper side, and images captured in real time at the monitoring points, or a city map may be displayed in the display windows in the middle region.

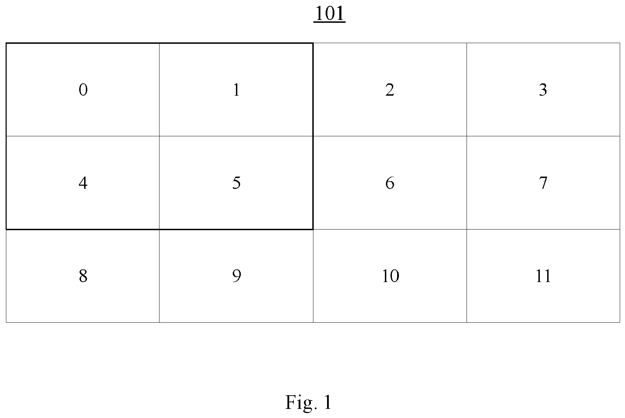

FIG. 1 is a schematic structure diagram of a display screen provided by an embodiment of the present application. Exemplarily, as shown in FIG. 1, the display screen 101 may include 12 fixed windows. Each fixed window in the display screen 101 may have a corresponding number. For example, the 12 fixed windows are sequentially numbered from 0 to 11 in an order from left to right and from top to bottom. Alternatively, some adjacent fixed windows among the 12 fixed windows may be set up as a splicing window. For example, four fixed windows numbered 0, 1, 4, and 5 may be set up as a single splicing window to display the screen as a whole. Alternatively, the display screen 101 may also include 1, 4, 6, 9 or other numbers of fixed windows, which is not limited by the embodiments of the present application. Alternatively, the fixed windows may also be numbered based on other orders, such as be numbered according to an S-shape; the fixed windows may also be numbered starting from 1 or 2, which is not limited by the embodiments of the present application.

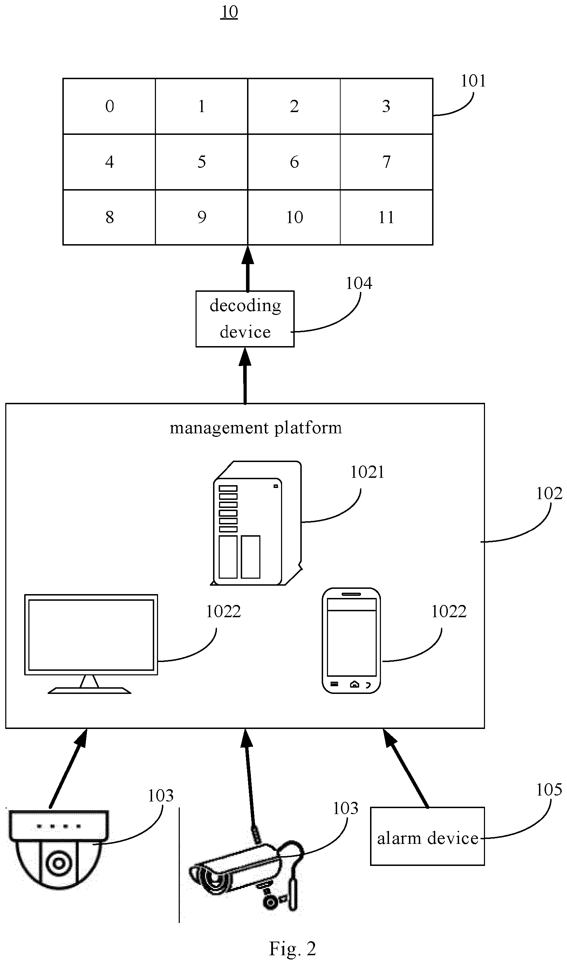

FIG. 2 is a schematic structure diagram of a monitoring system provided by an embodiment of the present application. As shown in FIG. 2, the monitoring system 10 may include a display screen 101, a management platform 102, and a plurality of monitoring points 103. The management platform 102 may include a server 1021 and a management terminal 1022. It should be noted that the embodiment of the present application takes an example that the monitoring system 10 includes one display screen 101 and the management platform 102 includes two management terminals 1022. Alternatively, the monitoring system 10 may also include a plurality of display screens, and the management platform 102 may also include one, three or more management terminals 1022, which is not limited by the embodiments of the present application. The management terminal 1022 may be a mobile phone, a tablet computer, a laptop computer, and a desktop computer. The server 1021 may be a server, or a server cluster composed of several servers, or a cloud computing service center, etc., which is not limited by the embodiment of the present application.

The display screen 101, the monitoring points 103, and the management terminal 1022 may all communicate with the server 1021, and the management terminal 1022 may control the display screen 101 and the monitoring points 103 through the server 1021. Exemplarily, the monitoring points 103 may upload a captured image to the server 1021, and the server 1021 may forward the image to the display screen 101 for displaying. The staff may, through the management terminal 1022, set a display mode of the display screen 101 and operate the monitoring points 103 accordingly. Exemplarily, the staff may, through the management terminal 1022, set correspondences between display windows in the display screen 101 and the monitoring points 103, so that each display window displays an image captured by a corresponding one of the monitoring points 103. The staff may also, through the management terminal 1022, control the monitoring points 103 to change parameters for image acquisition. For example, the monitoring points 103 can be controlled to change a direction of image acquisition (e.g., to rotate the monitoring points 103), a frame rate of the image acquisition, an exposure time, and a focus position.

A management client may be installed in the management terminal 1022, to control the display screen as well as the monitoring points 103 after this management client is activated. The management client may be a client in a client/server (CS) structure, which may also be referred to as a CS client, and the CS client is also known as a desktop application. Alternatively, the management terminal 1022 may access a management web via a browser to control the display screen 101 as well as the monitoring points 103, and the management web may also be referred to as a web client. The server 1021 may be a server corresponding to the management client or management web. Alternatively, the management terminal 1022 installed with the management client may be located in the same area as the display screen 101, and after the staff carry out an operation on the management terminal 1022 with respect to the display screen 101, the staff may directly watch the display effect of the display screen 101, so that it is convenient to confirm whether the operation effect is satisfactory. Alternatively, the management terminal 1022 may be located in the same local area network as the display screen 101. The management terminal 1022 may also not be located in the same local area network as the display screen 101, which is not limited by the embodiments of the present application. Alternatively, the management terminal 1022 accessing the management web may view information or configure information and parameters with respect to the display screen 101 and the monitoring points 103. For example, an image display mode of the display screen 101, a linkage relationship of various devices in the monitoring system 10, and a management mode of various information received by the management platform 102.

Alternatively, the monitoring points 103 in the monitoring system 10 may also be referred to as encoding devices. The monitoring points 103 may encode the captured images and then transmit them to the management platform 102, specifically to the server 1021. Alternatively, the encoding devices may be independent of the monitoring points 103 and connect the monitoring points 103 to the management platform 102, to encode the images captured by the monitoring points 103 and then transmit them to the management platform 102.

Alternatively, please continue to refer to FIG. 1, the monitoring system 10 may further include a decoding device 104, which may connect the management platform 102 with the display screen 101. The decoding device 104 may receive image information sent by the server 1021 in the management platform 102, decode the image information and then control the display screen 101 to display the image information. Alternatively, the server 1021 may send information on a display mode of the display screen 101 to the decoding device 104, and the decoding device 104 may control the display screen 101 based on the information to display in a corresponding display mode. The decoding device 104 is equivalent to a control device of the display screen 101, and the server 1021 may control the display screen 101 through the decoding device 104.

Alternatively, please continue to refer to FIG. 2, the monitoring system 10 may further include an alarm device 105 that is connected to the management platform 102. The alarm device 105 may send an alarm message to the management platform 102 (e.g., the server 1021 therein), and the server 1021 may control the display screen 101 to display accordingly based on the alarm message. Alternatively, the monitoring points 103 may be directly used as the alarm device 105. For example, when determining, based on the images captured by the monitoring points 103, that an event that needs to be alarmed has occurred in the environment monitored by the monitoring points 103, the monitoring points 103 may send the alarm message to the server 1021 . Alternatively, the alarm device 105 may also be a device different from the monitoring points 103. Exemplarily, the monitoring points 103 may be connected to the alarm device 105, and the alarm device 105 may analysis the images captured by the monitoring points 103, and may send the alarm message to the server 1021 when determining, based on the images, that an event that needs to be alarmed has occurred in the environment monitored by the monitoring points 103. For another example, the alarm device 105 may also not be connected to the monitoring points 103. For example, the alarm device 105 can be an alarm stake, and the alarm device 105 includes an alarm button that can be actively pressed by a person at the location of the alarm device 105 to trigger the alarm device 105 to send the alarm message to the server 1021. For another example, the alarm device 105 may also detect other information, that can trigger an alarm, in the environment in which the alarm device 105 is located, e.g., the alarm device 105 may include a smoke alarm, a gas alarm, or a temperature and humidity alarm. Alternatively, the monitoring points 103, the decoding device 104, the encoding device, and the alarm device 105 may jointly form a general integrated security platform for the Internet of Things.

Alternatively, individual devices in the monitoring system 10 can be linked, individual events and devices can also be linked, and individual events and messages can be linked either. For example, in the monitoring system 10, links are made between different monitoring points 103, between the alarm device 105 and the monitoring points 103, and between the alarm device 105 and the display screen 101; the alarm message sent by the alarm device 105 can be linked with the monitoring points 103, or with the display screen 101, or with the images captured by the monitoring points 103. Exemplarily, the alarm message sent by the alarm device 105 may be linked with at least one monitoring point 103. After receiving the alarm message, the server 1021 may obtain images captured by each of the monitoring points 103 linked with the alarm message, and control the display screen 101 to display the images captured by these monitoring points 103, so as to facilitate the staff to deal with the event corresponding to the alarm message. For example, the alarm device 105 is a camera arranged in a museum, and when the camera detects the presence of an moving person in the environment monitored by the camera at night, the camera may determine that there is an event in the environment that needs to be alarmed, and in turn, the camera may send the alarm message to the server 1021. Based on the alarm message, the server 1021 may control the display screen 101 to display images captured by monitoring points 103 at corridors, in halls, and at exits of the museum, so that the staff can determine the location of the moving person in the environment and track the person so as to take corresponding measures.

Alternatively, when the monitoring system 10 includes a plurality of display screens 101, the server 1021, after receiving an alarm message, may control a display screen linked with the alarm message to display the images captured by the monitoring points 103. Alternatively, different display screens 101 may also be linked with different alarm devices, e.g., the server 1021 may determine the alarm device 105 that sends the alarm message and determine, based on that alarm device 105, the display screen 101 that displays the images captured by the monitoring points 103.

It should be noted that, in the related art, for different alarm messages, it is necessary for the staff to manually configure a profile to indicate the display position in the display screen for the image captured by the monitoring point, and manually trigger the image to be displayed on the display screen. In the related art, the process of pushing the image to be displayed on the display screen based on the alarm message is in a semi-automated state, which requires manual intervention throughout, and a configuration process of the profiles is more complicated, which requires higher professional quality of an operator. When a large number of alarm messages are generated, the operator is prone to errors, and the image linked with the alarm message cannot be pushed to be displayed on the display screen in time. In addition, since the pre-set profiles cannot be changed, after selecting a certain profile, the image can be displayed only in a display position specified in the profile. However, in the display screen, the display position of the image indicated by the profile may be currently displaying more important information, which may result in the information being unable to continue to be displayed or the alarm message being unable to be prompted, resulting in poor use of the display screen and poor handling effect of the alarm event.

The following embodiments of the present application provide a method for controlling a display screen without setting up a profile for an alarm message, which can, based on the alarm message, directly and autonomously decide how to display an image linked with the alarm message, simplifies the process of controlling the display screen to display the image based on the alarm message, and improves the display flexibility.

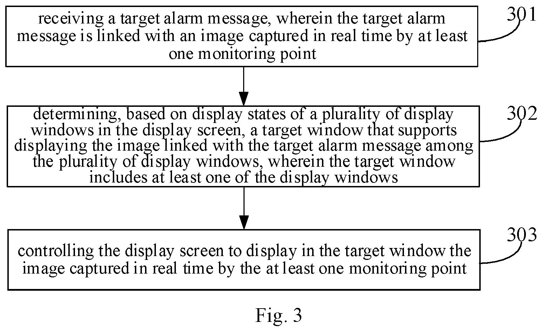

FIG. 3 is a flowchart of a method for controlling a display screen provided by an embodiment of the present application. The method may be applied in a control apparatus, which may be the server 1021 in FIG. 2, or include the server 1021 and the decoding device 104. As shown in FIG. 3, the method may include:

Step 301: receiving a target alarm message, wherein the target alarm message is linked with an image captured in real time by at least one monitoring point.

Exemplarily, the target alarm message may be sent by the alarm device 105 in the monitoring system 10 shown in FIG. 2. The target alarm message may indicate a specific alarm event, e.g., the target alarm message may include an alarm event name, such as the alarm event name is an object movement alarm. Alternatively, the target alarm message may also indicate an identifier of the alarm device sending the target alarm message. The control apparatus may determine at least one monitoring point corresponding to the target alarm message based on the target alarm message, and obtain the image captured in real time by the at least one monitoring point.

Step 302: determining, based on display states of a plurality of display windows in the display screen, a target window that supports displaying the image linked with the target alarm message among the plurality of display windows, wherein the target window includes at least one of the display windows.

Exemplarily, the display states of the display windows in the display screen may include: an idle state (such as a black screen state) and a displaying state. The displaying state may specifically include at least one of: a state in which the image linked with the alarm message is displayed, an ordinary image preview state, a screen projection state (also known as a desktop-on-wall state), and a video playback state and so on. Alternatively, the control apparatus may, based on a specific display state of each display window, determine a display window in which a priority of the displayed image is lower than a priority of the target alarm message, as the target window.

Step 303: controlling the display screen to display in the target window the image captured in real time by the at least one monitoring point.

The control apparatus, after obtaining the image captured in real time by the at least one monitoring point linked with the target alarm message and determining the target window in the display screen, can display the image captured in real time by the at least one monitoring point in the target window.

In summary, in the embodiment of the present application, after receiving the alarm message, the control apparatus can determine, based on the current usage of each display window in the display screen, the target window for displaying the image captured by the monitoring point linked with the alarm message. In this way, it is not necessary for the staff to pre-configure alarm profiles corresponding to various alarm messages, to determine the display position of the image captured by each monitoring point, which simplifies the process of displaying the image captured by the monitoring point linked with the alarm message, and the display position of the image captured by each monitoring point is not fixed, thus improving the display flexibility.

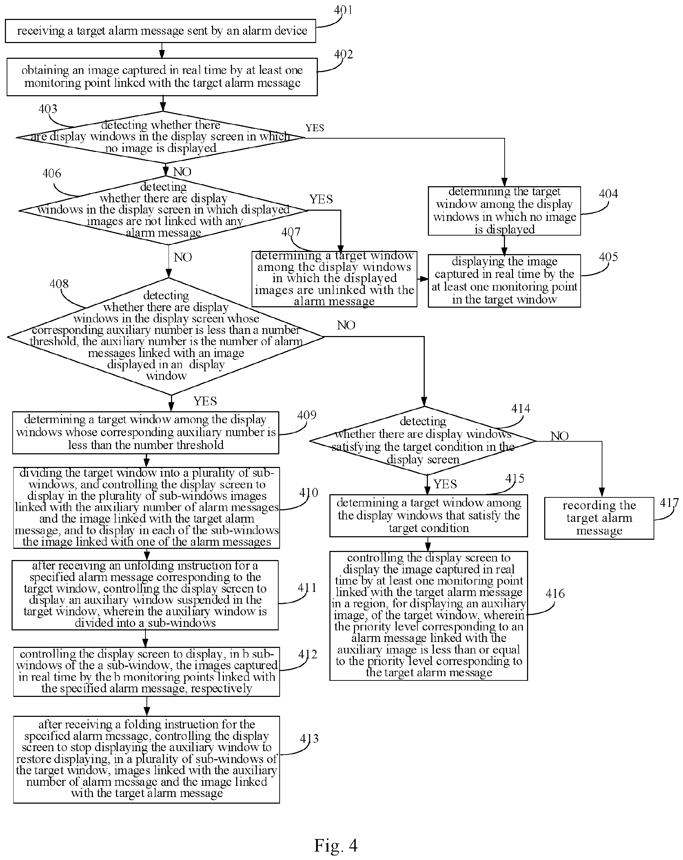

FIG. 4 is a flowchart of another method for controlling a display screen provided by an embodiment of the present application. The method may be applied to a control apparatus, which may be the server 1021 in FIG. 2, or the control apparatus may include the server 1021 and the decoding device 104. As shown in FIG. 4, the method may include:
Step 401: receiving a target alarm message sent by an alarm device.

After detecting an alarm event, the alarm device may generate a target alarm message corresponding to the alarm event and send the target alarm message to a control apparatus (such as the server 1021 in FIG. 2). It should be noted that the manner in which the alarm device determines the alarm event can be referred to the relevant introduction of the alarm device in FIG. 2, and the details are not repeated in the embodiment of the present application. Alternatively, the target alarm message may indicate the type of the alarm event corresponding to the target alarm message, and this target alarm message may also indicate the alarm device that triggers the control apparatus to receive this target alarm message. Exemplarily, the target alarm message may indicate that the type of the alarm event corresponding to the target alarm message is an object movement type, or a device damage type, or another unexpected condition type, or other types customized by the staff. The target alarm message may also include identifier of the alarm devices, such as a camera 1, an alarm stake 2, or a smoke alarm 3 and so on.

It should be noted that the embodiments of the present application are presented in an example case in which the target alarm message received by the control apparatus is sent directly by the alarm device. Alternatively, the alarm device may also send information of an event monitored by the alarm device to the control apparatus, and the control apparatus determines whether the event is an alarm event based on the information of the received event. After determining that the event is an alarm event, the alarm message corresponding to the alarm event is then generated and the subsequent steps are performed.

Alternatively, in the step 401, specifically, the alarm device 105 in the monitoring system 10 of FIG. 2 can send the target alarm message to the server 1021, and accordingly the server 1021 receives the target alarm message.

Step 402: obtaining an image captured in real time by at least one monitoring point linked with the target alarm message.

The target alarm message may be linked with the image captured in real time by the at least one monitoring point. Exemplarily, the at least one monitoring point may be pre-configured by the staff through the management terminal (e.g., via the web client). After various monitoring points and the alarm device in the monitoring system have been installed, the staff may configure, for various types of alarm messages, the monitoring points linked with various types of alarm messages via the management terminal; or may also configure, for each alarm device, the monitoring points linked with each alarm device; or may also configure, for different alarm messages sent by different alarm devices, the monitoring points linked with different alarm messages sent by different alarm devices. Correspondences between the alarm messages and the linked monitoring points can be stored in a server or in a cloud platform.

After receiving the target alarm message, the control apparatus may query an identifier of the at least one monitoring point linked with the target alarm message, and then obtain the image captured in real time by the at least one monitoring point. Exemplarily, the control apparatus may send a video upload instruction to the at least one monitoring point, to instruct the at least one monitoring point to send the image captured in real time to the control apparatus. Alternatively, each monitoring point in the monitoring system may upload the captured image to a cloud platform, which may store all the received data. The server, after determining the at least one monitoring point, may obtain from the cloud platform images uploaded by the at least one monitoring point after the current moment.

Alternatively, in step 402, specifically, the server 1021 in the monitoring system 10 of FIG. 2 may obtain, from the at least one monitoring point 103, the image captured in real time by the monitoring point 103.

Step 403: detecting whether there are display windows in the display screen in which no image is displayed. When there are display windows in the display screen where no image is displayed, step 404 is performed; when all display windows in the display screen are displaying images, step 406 is performed.

Alternatively, when each display window in the display screen is displaying an image, the display window has a corresponding indicator to indicate that it is displaying an image. The control apparatus may detect the indicator corresponding to each display window to determine whether there is a display window where no image is displayed in the display screen. It should be noted that the display window where no image is displayed is a display window that is not currently being used, i.e., an idle window. Alternatively, the control apparatus may traverse all display windows in the display screen, i.e., detect all display windows in the display screen, to determine all display windows where no image is displayed. Alternatively, the control apparatus, after detecting the display window where no image is displayed, may no longer detect the other display windows, even if there are other display windows that are not detected. It should be noted that the display windows described in the embodiments of the present application include separate fixed windows and a splicing window. For a LCD splicing screen, each fixed window in the splicing screen is the display area of an LCD display screen; for the LED splicing screen, each fixed window in the splicing screen is a separate area in the window division template. For other descriptions of the display windows, please refer to the relevant description with respect to FIG. 1, and the details are not repeated in the embodiment of the present application.

Alternatively, various display windows in the display screen may be detected in a certain detection order, and the control apparatus may determine the detection order of the various display windows and then detect the various display windows in the display screen in the detection order. Exemplarily, each fixed window in the display screen has a corresponding number, which can be set by the staff via the management terminal. The numbering manner of the fixed windows may refer to the relevant introduction in FIG. 1, which is not limited by the embodiments of the present application. The control apparatus may sequentially detect whether an image is displayed in each fixed window in accordance with the numbering order of various fixed windows. Since a plurality of fixed windows forming the splicing window are used as one window for image display, in determining that no image is displayed in a certain fixed window, the control apparatus may directly determine, if the fixed window is used to form a certain splicing window, that no image is displayed in the splicing window.

Alternatively, each display window in the display screen may be configured to display the image linked with the alarm message. After receiving the alarm message, the control apparatus may detect all display windows in the display screen to determine whether there is a display window where no image is displayed. Alternatively, only some of the display windows in the display screen may be configured to display the image linked with the alarm message. After receiving the alarm message, the control apparatus may detect the some of the display windows in the display screen to determine whether there is a display window where no image is displayed in the display screen. Exemplarily, the staff may pre-configure, via the management terminal, the display windows in the display screen for displaying the image linked with the alarm message. The server may record the numbers of fixed windows in the display windows configured to display the image linked with the alarm message, and the numbers recorded by the server may be information linked with the alarm.

Exemplarily, for the LCD splicing screen, the staff may configure some display windows therein to display images linked with the alarm message. For example, four display windows numbered 0, 1, 4, and 5 in the splicing screen shown in FIG. 1 may be configured to display images linked with the alarm message, so that after receiving the alarm messages, the control apparatus may detect only among the four display windows whether there is a display window where no image is displayed. Exemplarily, for the LED splicing screen, the staff may configure all display windows therein to display the images linked with the alarm message. After receiving the alarm message, the control apparatus may detect, with respect to all the display windows in the display screen, whether there is a display window where no image is displayed. Alternatively, the staff may also not configure the display windows in the display screen, so that the control apparatus defaults that all display windows may be used to display the images linked with the alarm message. It should be noted that the display windows specifically configured by the staff for displaying the images linked with the alarm message may also be other display windows, and for the LED splicing screen, some of the display windows therein can also be configured for displaying the images linked with the alarm message, which is not limited by the embodiments of the present application.

Alternatively, for different alarm events, the staff may also configure display windows linked with the different alarm events, i.e. display windows for displaying the images linked with the alarm messages. In this way, after receiving such an alarm event, the control apparatus may determine the display windows linked with the alarm event, and thus detect, only with regard to the display windows linked with the alarm event, whether there is a display window where no image is displayed.

Alternatively, if the staff would like to make a certain display window in the display screen to be used for only displaying an image from a certain image source, the display window may be locked, and the image source of the image displayed in the locked display window is prohibited from being changed. The staff may set the display window on the management terminal so that the display window is locked. For example the locked display window may correspond to a specific state identifier, and the control apparatus may determine whether the display window is locked based on the state identifier. The control apparatus may not change the image source of the image displayed in the locked display window when controlling the display screen to display the image. Alternatively, the control apparatus may detect whether there is an idle window for an unlocked display window. Exemplarily, when sequentially detecting each display window, the control apparatus may detect whether the display window is locked firstly. If it is determined that a certain display window is locked, the display window is skipped and the next display window is directly detected. If it is determined that the display window is not locked, it continues to detect whether the display window is displaying an image.

In the embodiment of the present application, the control apparatus may detect whether a display state of the display window in the display screen satisfies a target condition, and a display window that satisfies the target condition may support displaying the image linked with the target alarm message. In step 403, this target condition includes the no image being displayed in the display window. Alternatively, in step 403, specifically, the server 1021 in the monitoring system 10 shown in FIG. 2 may determine the display state of each display window in the display screen 101 and determine whether there is a display window that satisfies the target condition.

Step 404: determining the target window among the display windows in which no image is displayed. Step 405 is executed.

Alternatively, the control apparatus may determine any of the display windows where no image is displayed as the target window; alternatively, the control apparatus may determine the firstly determined display window where no image is displayed as the target window; alternatively, if there are a plurality of adjacent display windows where no image is displayed, the control apparatus may determine the plurality of adjacent display windows as the target window. Alternatively, if there is a splicing window in the display windows where no image is displayed, the control apparatus may preferentially determine the splicing window as the target window, so as to ensure that the image linked with the target alarm message is displayed in a larger area, to improve the clarity of image display, and facilitate the staff to watch. Alternatively, step 404 may specifically be performed by the server 1021 in the monitoring system 10 shown in FIG. 2.

It is noted that the target window is a display window for displaying the image linked with the target alarm message. In determining that there are display windows in the display screen where no image is displayed, the control apparatus may determine that the display windows are idle, and thus may determine the target window among the display windows. In this way, it can be avoided that the display of the image for the alarm message affects the display of other information on the display screen, and the display of the display screen can be ensured to be comprehensive.

Step 405: displaying the image captured in real time by the at least one monitoring point in the target window.

Exemplarily, when the number of the at least one monitoring point is 1, the control apparatus may directly control the display screen to display the image captured in real time by the monitoring point in the target window. When the number of the at least one monitoring point is greater than 1, the control apparatus may divide the target window into a plurality of sub-windows, displays images captured in real time by the at least one monitoring point in the plurality of sub-windows, and each of the sub-windows is used to display an image captured in real time by a monitoring point. The display mode may also be referred to as tiling the images captured in real time by the at least one monitoring point in the target window. The state in which the display window displays the image captured in real time by the monitoring point may be referred to as the state in which the display window previews the image captured in real time by the monitoring point. For example, the control apparatus may determine, based on the number of the at least one monitoring point, the number of sub-windows obtained by dividing the target window, such as x. Then, a shape corresponding to the target window in the display screen is divided into x parts, and correspondences between these x parts and the monitoring points may also be set. The control apparatus may divide, based on the shape and size relationship of each part in the x parts, an area in the display screen where the target window is located into x display areas. Each display area includes a plurality of pixels in the display screen, and the x display areas are x sub-windows. The control apparatus may control the pixels in each display area to display the image captured in real time by the corresponding monitoring point, so as to realize the actual division of the target window and the display of the image in each sub-window. Alternatively, the number of the plurality of sub-windows may be equal to the number of the at least one monitoring point, or may be greater than the number of the at least one monitoring point. Alternatively, each sub-window can also display an identifier of the corresponding monitoring point to indicate the image displayed in the sub-window is captured from the monitoring point. For example, the identifier of the monitoring point may include a name, a number of the monitoring point, or a location where the monitoring point is arranged.

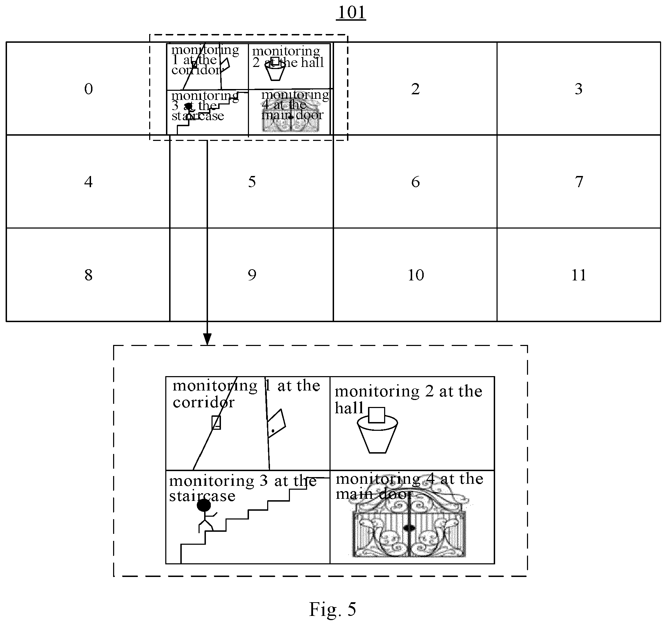

FIG. 5 is a schematic structure diagram of another display screen provided by an embodiment of the present application. As shown in FIG. 5, the display window numbered 1 in the display screen is the target window, that is, the second display window in the first row is the target window. Assuming that the target alarm message is linked with four monitoring points, the control apparatus may divide the target window into four sub-windows, and each of the sub-windows displays an image captured in real time by one of the monitoring points. Assuming that these four monitoring points are arranged at the corridor, the hall, the staircase and the main door, the numbers of the four monitoring points are 1, 2, 3 and 4, respectively. As shown in FIG. 5, these four sub-windows can display the identifier of each monitoring point, namely "monitoring 1 at the corridor", "monitoring 2 at the hall", "monitoring 3 at the staircase" and "monitoring 4 at the main door".

Alternatively, the display window may support the set number of a plurality of sub-windows, i.e., the number of sub-windows into which the display window is supported to be divided may include the number of the plurality of sub-windows, such as the display window is supported to be divided into 1, 4, 9 and 16 sub-windows. Each number may correspond to a specific division mode. If the display window is rectangular, when the display window is divided into 4 sub-windows, the specific division mode is 4 all-equal rectangular sub-windows arranged in two rows and two columns; when the display window is divided into 9 sub-windows, the specific division mode is 9 all-equal rectangular sub-windows arranged in three rows and three columns. In dividing the display window into sub-windows, a number of sub-windows may be selected among the set number of the plurality of sub-windows, and the display window may be divided based on the division mode corresponding to the number. Alternatively, the other number of sub-windows may be set, or the number of sub-windows into which the display window is supported to be divided and the division mode may not be set in advance. The display window may be divided into any number of sub-windows, and there may be differences in the shapes and areas of the sub-windows, which is not limited by the embodiments of the present application.

The control apparatus may determine the number of sub-windows obtained by dividing the target window based on the number of the at least one monitoring point linked with the target alarm message. Exemplarily, the control apparatus may determine, in the number of sub-windows supported by the target window, a number to be equal to the number of the at least one monitoring point, or a number to be greater than and closest to the number of the at least one monitoring point, in order to divide the target window into this number of sub-windows, and then, the image captured in real time by one monitoring point can be displayed in each of the sub-windows. In this way, on the basis of ensuring that the image captured in real time by each monitoring point is displayed, it is possible to ensure that the area of each sub-window is as large as possible and the clarity of image display in the sub-window is high. When the number of sub-windows obtained by dividing the target window is greater than the number of the at least one monitoring point, the images captured in real time by the at least one monitoring point may be displayed respectively in at least one sub-window in the front of the plurality of sub-windows; or the images captured in real time by the at least one monitoring point may be displayed respectively in at least one sub-window in the middle or at the back; or the sub-windows in which the images captured in real time by the at least one monitoring point are displayed may also be selected arbitrarily.

Alternatively, the number of monitoring points linked with the alarm message may be less than a threshold value of the number of monitoring points. The threshold value of the number of monitoring points may be equal to the number of sub-windows set for the display window. For example, the number of monitoring points that can be linked with each alarm message can be at most 16, and each display window can be divided into at most 16 sub-windows.

Alternatively, in step 405, specifically, the identifier of the target window, the division mode of the sub-windows, the correspondences between the monitoring points 103 and the sub-windows, and the images captured in real time by each of the monitoring points 103 may be sent to the decoding device 104 by the server 1021 in the monitoring system 10 shown in FIG. 2. Based on the received information, the decoding device 104 may control the target window in the display screen 101 to be divided into a plurality of sub-windows, and display the image captured in real time by the corresponding monitoring point 103 in each sub-window.

Step 406: detecting whether there are display windows in the display screen in which displayed images are not linked with any alarm message. When there are display windows in the display screen in which the displayed images are not linked with any alarm message, step 407 is performed; when all images displayed in all display windows in the display screen are linked with the alarm message, step 408 is performed.

After determining, in step 403, that all the display windows in the display screen are displaying images, the control apparatus may further perform detection to determine whether there is the target window. For example, the control apparatus may detect whether there display window that satisfies another target condition, for example, the target condition includes that the display window is displaying an image and the displayed image is not linked with any alarm message, and a display window that satisfies the target condition may also be referred to as a display window that does not have an alarm on the screen.

Alternatively, the control apparatus may traverse each display window in the display screen, i.e., all display windows in the display screen are detected to determine all display windows in which the displayed images are not linked with any alarm message. Alternatively, after detecting the display windows in which the displayed images are not linked with any alarm message, even if there are other display windows that are not detected, the control apparatus may no longer detect the other display windows. Alternatively, the control apparatus may also detect, in a certain detection order, whether the image displayed in each display window of the display screen is linked with the alarm message. Regarding the detection order, please refer to the introduction for the detection order in step 403, which will not be repeated in the embodiments of the present application.

Alternatively, the control apparatus may detect, for a display windows that is not locked, whether the image displayed therein is linked with an alarm message. Exemplarily, the situation in which the window is locked may include other situations in addition to being set by a human. For example, the display window may be automatically locked when it is playing back a video, and the played back video may include playing back a video historically captured by the monitoring point, or may also include playing back videos from other device than the monitoring point. For another example, the display window may also be automatically locked when performing an operation of desktop-on-wall. The desktop-on-wall is an operation of projecting screens from other display devices onto the display screen, and the desktop-on-wall is usually used for shared watching by multiple persons, where the displaying the screens is of high importance. With respect to the locked display window (e.g., locked by setting manually), reference may also be made to the relevant introduction in step 403, which is not repeated in the embodiments of the present application. Exemplarily, when detecting each display window sequentially, the control apparatus may firstly detect whether the display window is locked. If it is determined that a certain display window is locked, the display window is skipped and the next display window is directly detected. If it is determined that the display window is not locked, it continues to detect whether the image displayed in the display window is linked with the alarm message.

Alternatively, in step 406, specifically, the server 1021 in the monitoring system 10 shown in FIG. 2 can determine the display state of each display window in the display screen 101 and determine whether there are display windows that satisfy the target condition. That is, it is determined whether there is a display window in which the displayed image is not linked with any alarm message.

Step 407: determining the target window among the display windows in which the displayed images are not linked with any alarm message. Step 405 is performed.

It should be noted that, the manner by which the control apparatus determines the target window among the display windows in which the displayed images are not linked with any alarm message can refer to the manner for determining the target window among the display windows where no image is displayed in step 404. Exemplarily, the control apparatus may determine any of the display windows in which the displayed image are not linked with any alarm message as the target window; alternatively, the control apparatus may determine the firstly determined display window in which the displayed image is not linked with any alarm message as the target window; alternatively, if there are a plurality of adjacent display windows in which the displayed images are not linked with any alarm message, the control apparatus may determine the plurality of adjacent display windows as target windows. Alternatively, if there is a splicing window among the display windows in which the displayed images are not linked with any alarm message, the control apparatus may preferentially determine the splicing window as the target window. Alternatively, step 407 may specifically be performed by the server 1021 in the monitoring system 10 shown in FIG. 2.

It should be noted that the image linked with the alarm message is more important than the image that is not linked with any alarm message (e.g., the image captured by an ordinary monitoring point), and the staff needs to pay more attention to the image linked with the alarm message in order to deal with the occurred alarm events. By determining the target window among the display windows in which displayed images are not linked with any alarm message, it can be ensured that the display window in the display screen is used to display more important and urgent information, to ensure the timely processing of important events, and to ensure the effective use of the display screen.

Alternatively, after the target window is determined in step 407, the image captured in real time by the at least one monitoring point linked with the target alarm message may replace an image originally displayed in the target window, i.e., an image source of the image displayed in the target window is changed. When the image captured in real time by the at least one monitoring point is displayed in the target window, the control apparatus may stop acquiring an image from the original image source. In this way, it is equivalent to displaying an image from a different image source in an original image display layer. Alternatively, the image captured in real time by the at least one monitoring point may also only cover the image originally displayed in the target window, and the control apparatus may continue to acquire the image from the original image source. In this way, it is equivalent to the image captured in real time by the at least one monitoring point being suspended above the originally displayed image, and only an image display layer is added to the target window to display the image captured in real time by the at least one monitoring point, without deleting the image display layer in which the originally displayed image in the target window is located.

Step 408: detecting whether there are display windows in the display screen whose corresponding auxiliary number is less than a number threshold, wherein the auxiliary quantity is the number of alarm messages linked with an image displayed in a display window. When there are display windows in the display screen whose corresponding auxiliary number is less than the number threshold, step 409 is performed; when the auxiliary number corresponding to each of the display windows in the display screen is equal to the number threshold, step 414 is performed.

After determining in step 406 that the images displayed in all the display windows in the display screen are linked with the alarm message, the control apparatus may further detect to determine whether there is the target window. For example, the control apparatus may detect whether there is a display window that satisfies a further target condition, wherein the target condition includes the auxiliary number corresponding to the display window being less than the number threshold, and the auxiliary number is the number of alarm messages linked with the image currently displayed in the display window. For example, the display window may be divided into a plurality of sub-windows, and each of the sub-windows may display an image from an image source (e.g., a monitoring point); or each of the sub-windows may also correspond to an alarm message for displaying the image captured in real time by each of the monitoring points linked with the alarm message.

It is noted that the number of alarm messages linked with the image displayed in the display window may have a maximum value, i.e., the number threshold, and the number threshold is also the maximum number of alarm messages supported by the display window. Alternatively, the number threshold may be equal to the maximum number of sub-windows supported by the display window. Exemplarily, the number threshold may be 16. The number threshold may also be other values, such as 6, 9, or 12, etc., which is not limited by the embodiments of the present application. If the auxiliary number corresponding to the display window is less than the number threshold, the control apparatus may determine that the display window can further support more alarm messages. On the basis of displaying, by the display screen, the images captured by the monitoring points linked with the original alarm message, more images captured by the monitoring points linked with the alarm message can further be displayed.

Alternatively, the control apparatus may traverse each display windows in the display screen, i.e., detect all display windows in the display screen, to determine all display windows whose corresponding auxiliary number is less than the number threshold. Alternatively, after detecting the display windows whose corresponding auxiliary number is less than the number threshold, even if there are other display windows that are not detected, the control apparatus may no longer detect the other display windows. Alternatively, the control apparatus may also detect, in a certain detection order, whether the image displayed in each display window of the display screen is linked with the alarm message. Regarding the detection order, please refer to the introduction of the detection order in step 403, and the embodiment of the present application will not repeat the details. Alternatively, with respect to the unlocked display window, the control apparatus may detect whether the image displayed in the unlocked display window is linked with the alarm message. The unlocked display window has been determined after step 406, and in step 408, detection can be performed directly for the unlocked display window without determining which display window is unlocked. With respect to the locked display window, please refer to the relevant introduction in steps 403 and 406, which is not repeated in the embodiments of the present application.

Alternatively, step 408 may specifically be performed by the server 1021 in the monitoring system 10 shown in FIG. 2. The server 1021 may determine the display state of each display window in the display screen 101 and determine whether there is a display window that satisfies the target condition, i.e., determine whether there is a display window whose corresponding auxiliary number is less than the number threshold.

Step 409: determining the target window among the display windows whose corresponding auxiliary number is less than the number threshold. Step 410 is performed.

It should be noted that, the manner in which the control apparatus determines the target window among the display windows in which the displayed images are not linked with any alarm message can refer to the manner for determining the target window in steps 404 and 406, which will not be repeated in the embodiments of the present application. Alternatively, step 409 may specifically be performed by the server 1021 in the monitoring system 10 shown in FIG. 2. It should be noted that the display window whose corresponding auxiliary number is less than the number threshold is capable of displaying other images on the basis of displaying an image from the original image source. By determining the target window among the display windows, it can be ensured that the target window still displays the image originally displayed therein while displaying the image linked with the target alarm message. In this way, the staff can take into account other information when processing the target alarm message, which improves the richness of the display content of the display screen and makes the display screen to be fully utilized.

Step 410: dividing the target window into a plurality of sub-windows, and controlling the display screen to display in the plurality of sub-windows images linked with the auxiliary number of alarm messages and the image linked with the target alarm message, and to display in each of the sub-windows the image linked with one of the alarm messages. Step 411 is performed.

After determining the target window, the control apparatus may re-divide the target window into sub-windows based on the auxiliary number, and the number of sub-windows obtained by re-division needs to be greater than or equal to the auxiliary number plus one to ensure that there is a sub-window corresponding to the target alarm message in the re-divided target window. Assuming that the auxiliary number corresponding to the target window is n, the control apparatus may divide the target window into m sub-windows based on the auxiliary number, wherein 2 <, n + 1 <, m, and m is less than or equal to a number threshold. The control apparatus may control the display screen to display images linked with the auxiliary number of alarm messages and the image linked with the target alarm message in n+1 sub-windows of the m sub-windows, respectively. It should be noted that the manner for determining m based on n+1 can be referred to the manner for determining the number of sub-windows based on the number of at least one monitoring point in step 405, and the manner for dividing the target window can be referred to the manner for dividing the target window in step 405, which will not be repeated in the embodiments of the present application.

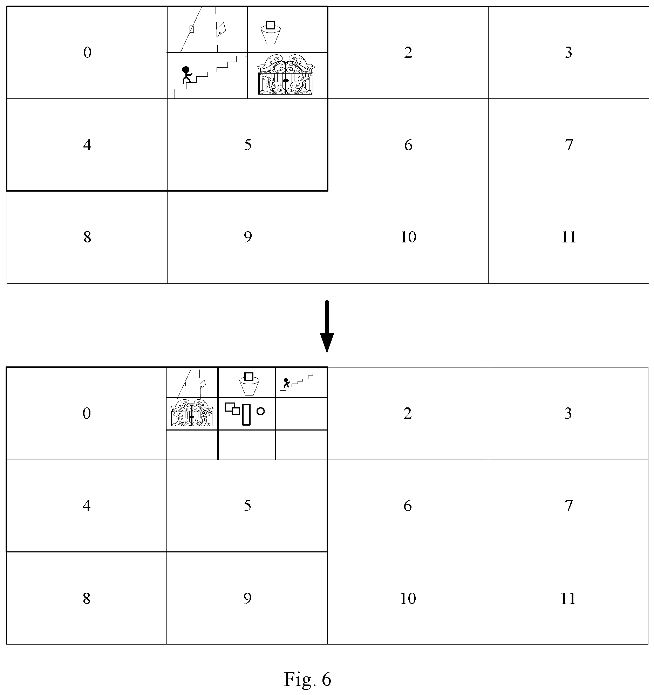

Exemplarily, the number of sub-windows into which the display window is supported to be divided includes 1, 4, 9, and 16. FIG. 6 is a diagram of a display state change process of a display screen provided by an embodiment of the present application. As shown in FIG. 6, the second display window in the first row in the display screen is originally divided into four sub-windows, each of which displays an image captured by a monitoring point in real time linked with one alarm message. After receiving the target alarm message, the control apparatus determines the display window as the target window, and then the control apparatus may add the target alarm message to the target window so that the target window further displays an image linked with the target alarm message. At this time, the control apparatus may determine that the target window needs to include at least 5 sub-windows to enable the display of the image linked with the target alarm message. The control apparatus divides the target window by the number of sub-windows closest to 5 supported by the display window, for example, dividing the target window into 9 sub-windows and displaying the images linked with the original alarm message and the image linked with the target alarm messages in 5 sub-windows of the sub-windows. In this way, on the base of ensuring that images linked with individual alarm messages are all displayed, it can be ensured that as many sub-windows as possible in the target window are used for displaying images, and the area of each sub-window is as large as possible to ensure the clarity of image display in the sub-window is higher.

In the embodiment of the present application, for the case where the display window corresponds to a plurality of alarm messages, i.e., the image display is performed for a plurality of alarm messages, and the display window includes a plurality of sub-windows, each of which displays an image linked with one of the alarm messages: if the number of monitoring points linked with a certain alarm message is greater than 1, the control apparatus may control the display screen to display, in a sub-window corresponding to the alarm message, the image captured in real time by each of the monitoring points linked with the alarm message in turn. Alternatively, when displaying the image captured by each monitoring point, an identifier of the monitoring point may be displayed in the sub-window. Alternatively, a continuous display duration of the image captured by each monitoring point may be equal, such as the image captured by each monitoring point is continuously displayed for 5 seconds, after which the image captured in real time by the next monitoring point is displayed. Alternatively, the continuous display duration of the image captured by each monitoring point may also be set by the staff. The order of various monitoring points can be set in advance, and the image source (i.e., the monitoring point) of the displayed image can be switched in this order; or the order of various monitoring points can be determined randomly, but it is necessary to ensure that the image captured by each of the monitoring points is displayed once during a round of display.

Alternatively, when the target window corresponds to a plurality of alarm messages (including the target alarm message), the control apparatus may also determine whether the total number of monitoring points associated with the plurality of alarm messages is less than or equal to the number threshold, i.e., whether it is less than or equal to the maximum number of the sub-windows supported by the target window. If the total number of monitoring points associated with the plurality of alarm messages is less than or equal to the number threshold, the control apparatus may divide the target window into a plurality of sub-windows, and allow each of the sub-windows to display an image captured in real time by one of monitoring points linked with one of the alarm messages. The number of the plurality of sub-windows may be the number of sub-windows supported by the display window and closest to the total number of monitoring points. Exemplarily, the maximum number of sub-windows supported by the display window is 16, and the target window corresponds to two alarm messages, wherein one alarm message is linked with 5 monitoring points and the other alarm message is linked with 10 monitoring points. The control apparatus may divide the target window into 16 sub-windows, and display the images captured in real time by the 15 monitoring points in 15 of the sub-windows respectively. An identifier of the monitoring point corresponding to each sub-window may be displayed in the sub-window.

Alternatively, in step 410, specifically, the server 1021 in the monitoring system 10 shown in FIG. 2 may send to the decoding device 104 an identifier of the target window, a division manner of the sub-windows, correspondences between the respective alarm messages and the sub-windows, linkage relationships between the respective alarm messages and the monitoring points 103, and images captured in real time by the respective monitoring points 103. Based on the received information, the decoding device 104 may control the target window in the display screen 101 to be divided into a plurality of sub-windows, and display in each of the sub-windows the image captured in real-time by the monitoring point 103 linked with the alarm message to the sub-window.

Step 411: after receiving an unfolding instruction for a specified alarm message corresponding to the target window, controlling the display screen to display an auxiliary window suspended in the target window, wherein the auxiliary window is divided into a sub-windows. Step 412 is performed.

Wherein the specified alarm message is any one of the auxiliary number of alarm messages and the target alarm message, and the specified alarm message is linked with images captured in real time by b monitoring points, 1 <, b < a. The area of the auxiliary window is greater than the area of sub-windows, which display the images linked with the specified alarm message, in the target window. Exemplarily, the area of the auxiliary window is equal to the area of the target window, and the auxiliary window may cover the entire area of the target window. Alternatively, the area of the auxiliary window may also be less than the area of the target window, and the auxiliary window may cover only a portion of the area of the target window. It should be noted that when the images captured in real time by monitoring points linked with a plurality of alarm messages are displayed simultaneously in the target window, a display area of an image captured in real time by monitoring point linked with each of the alarm messages is smaller, and since the images captured in real time by individual monitoring points are displayed in turn, it is not possible to see a complete image captured by each of the monitoring points, and it is also not possible to see all images captured in real time by all of the monitoring points at the same time. Alternatively, the staff member may, by means of an input device, send to the control apparatus an unfolding instruction for a specified alarm message of interest to the staff, triggering the unfolding display of images captured in real time by the monitoring points linked with the specified alarm message, so that the images captured in real time by individual monitoring points can be displayed at the same time, or the display areas of the images can be expanded.

Alternatively, the input device may include a management terminal, and the staff may send the unfolding instruction to the control apparatus via the management terminal. Alternatively, the input device further includes a mouse, which is connected to the management terminal, and a mouse pointer may be displayed on the display screen of the management terminal. The staff may trigger, via the mouse, the management terminal to send the unfolding instruction to the server. Alternatively, the display screen of the management terminal is a touch screen, and the staff can directly trigger, through the touch screen, the management terminal to send the unfolding instruction to the server. A mirror window corresponding to the display screen, that is, display windows corresponding to individual display windows in the display screen, may be displayed on the management terminal. Instead of displaying the image captured in real time by the monitoring point, only an alarm identifier, a name of the alarm event, and an identifier of the monitoring point linked the target alarm message may be displayed in each of the display windows of the management terminal; or the image captured in real time by the monitoring point may also be displayed in each of the display windows of the management terminal. Exemplarily, the staff may move the mouse so that the mouse pointer is placed in a sub-window corresponding to the specified alarm message displayed in the management terminal, and then click the mouse to trigger the unfolding instruction for the specified alarm message. Alternatively, the sub-window corresponding to each alarm message displayed in the management terminal may also display an unfolding control, and the unfolding control may be triggered to trigger the unfolding instruction for the alarm message. Alternatively, the staff may also trigger the unfolding instruction through other input devices, and the other input devices are for example input devices such as terminals connected to the control apparatus or the display screen.

Alternatively, after receiving the unfolding instruction for the specified alarm message, the control apparatus may create a suspended auxiliary window in the target window of the display screen. The control apparatus may also determine the number of b monitoring points linked with the specified alarm message, and determine the number of sub-windows to be obtained by dividing the auxiliary window based on the number of the b monitoring points, i.e. a value of a, where the number of the a sub-windows is greater than or equal to the number of the b monitoring points. The control apparatus may then divide the auxiliary window into a sub-windows, to display in the a sub-windows images captured in real-time by the b monitoring points linked with the specified alarm message. It should be noted that the manner for determining the number of the a sub-windows may refer to the manner for determining the number of the sub-windows in step 405, and the manner for dividing the auxiliary window may refer to the manner for dividing the target window in step 405, which is not repeated in the embodiments of the present application.

Embodiments of the present application take as an example that the area of this the auxiliary window is smaller than the area of the target window and auxiliary window is only suspended over the target window. Alternatively, the auxiliary window may also be suspended over other window than the target window. Alternatively, the area of the auxiliary window may be larger than the area of the target window, and the auxiliary window may cover both the target window and other windows adjacent to the target window, which is not limited by the embodiments of the present application. Alternatively, the importance of the alarm messages in the other windows may be lower than the importance of the specified alarm message. Alternatively, the control apparatus may also, based on the unfolding instruction, divide a sub-window, that displays the image linked with the specified alarm message, in the target window into a plurality of small windows, and thereby display in the plurality of small windows the images captured in real time by the individual monitoring points linked with the specified alarm message, respectively.

It should be noted that the embodiments of the present application take as an example that the control apparatus receives the unfolding instruction for the alarm message corresponding to the target window. Alternatively, for any window in the display screen that corresponds to a plurality of alarm messages and the images linked with the plurality of alarm messages are displayed in individual sub-windows respectively, the staff can trigger the unfolding instruction for any alarm message corresponding to the window. The specific processing methods can be referred to the processing methods for the specified alarm message in the embodiments of the present application, which is not repeated in the embodiments of the present application.

Alternatively, in step 411, specifically, the unfolding instruction may be sent to the server 1021 by the management terminal 1022 where the CS client in the monitoring system 10 of FIG. 2 is located. The server 1021 may determine, based on the unfolding instruction, the number of sub-windows to be obtained by dividing and the division manner of the sub-windows. The server 1021 sends to the decoding device 104 an identifier of the target window and the division manner of the sub-windows. Based on the received information, the decoding device 104 may create an suspended auxiliary window on the target window in the display screen 101, and divide the auxiliary window into a plurality of sub-windows.

Step 412: controlling the display screen to display, in b sub-windows of the a sub-window, the images captured in real time by the b monitoring points linked with the specified alarm message, respectively. Step 413 is performed.

The manner in which the control apparatus controls the display screen to respectively display the images captured in real time by the b monitoring points in individual sub-windows can be referred to the related description of displaying the images captured in real time by the respective monitoring points in the sub-windows in step 405, which will not be repeated in the embodiments of the present application. In the embodiment of the present application, the images captured in real time by the b monitoring points may cover the images linked with other alarm messages corresponding to the target window, and the control apparatus may continue to acquire the images linked with the other alarm messages. The images captured in real time by the b monitoring points are suspended above the images linked with the other alarm messages, and the auxiliary window is equivalent to an additional image display layer added to the target window, without deleting the original image display layer (i.e., the layer in the target window which originally displays the images linked with the other alarm messages in turn). In the above step 411, the division of sub-windows is performed only for the newly added layer. Alternatively, the control apparatus may also stop the images linked with the plurality of alarm messages and originally displayed in the target window and directly change the layer in the target window which originally displays the images linked with the plurality of alarm messages, in order to re-divide the layer into sub-windows and display the images captured in real time by the b monitoring points in the layer.

Alternatively, in step 412, specifically, correspondences between the respective monitoring points 103 linked with the specified alarm message and the sub-windows may be determined by the server 1021 in the monitoring system 10 of FIG. 2. The server 1021 sends to the decoding device 104 the correspondences between the monitoring points 103 and the sub-windows, as well as the images captured in real-time by the respective monitoring points 103. The decoding device 104 may, based on the received information, control the display screen 101 to display the images captured in real time by the respective monitoring points 103 in the respective sub-windows of the target window.

It should be noted that the embodiment of the present application takes as an example that when the number of monitoring points linked with the specified alarm message is greater than 1, the control apparatus controls, based on the unfolding instruction, the images captured in real-time by the respective monitoring points linked with the specified alarm message to be displayed in the target window in a tiled manner, i.e., to be displayed in a plurality of sub-windows respectively. Alternatively, the images captured in real time by the plurality of monitoring points may also be displayed in the target window in turn to ensure that the image captured in real time by each of the monitoring points is displayed in a larger display area to ensure the clarity of image display.

Step 413: after receiving a folding instruction for the specified alarm message, controlling the display screen to stop displaying the auxiliary window to restore displaying, in a plurality of sub-windows of the target window, images linked with the auxiliary number of alarm message and the image linked with the target alarm message.

After viewing the unfolded image, the staff member may send, via the input device, a folding instruction for the specified alarm message to the control apparatus, triggering the control apparatus to control the target window to restore to a display state before receiving the unfolding instruction, such as the state displayed in step 410. That is, it is restored to a state in which images linked with the auxiliary number of alarm messages and the image linked with the target alarm message are displayed in the plurality of sub-windows of the target window, for example, the target window is divided into m sub-windows and the images linked with the auxiliary number of alarm messages and the image linked with the target alarm message are displayed in n+1 sub-windows, respectively. For other windows other than the target window, the display state before receiving the unfolding instruction is also restored, i.e., the state in which images linked with a plurality of alarm messages are displayed in a plurality of sub-windows in the window, respectively. It should be noted that the manner for sending the folding instruction via the input device can be referred to the related description of sending the unfolding instruction in step 411 above, and the embodiments of the present application will not repeat the details. Exemplarily, a folding control is displayed in a display window of the management terminal corresponding to the target window, which is unfolded, in the display screen, and the staff may move the mouse so that the mouse pointer is placed at the folding control, and then click the mouse to trigger the folding instruction for the specified alarm message. Alternatively, the staff may also trigger the folding instruction by means of other input devices, the other input devices is input devices such as terminals connected to the control apparatus or the display screen.

Alternatively, if, in step 412, an image display layer is newly added to display the images captured in real time by the b monitoring points, the control apparatus may destroy the layer in step 413. If, in step 412, the images captured in real time by the b monitoring points are displayed in the original layer, the control apparatus may change the layer in step 413 to restore the display state in step 410 in the layer.

Alternatively, in step 413, specifically, the folding instruction may be sent to the server 1021 by the management terminal 1022 where the CS client in the monitoring system of FIG. 2 is located. The server 1021 may, based on the folding instruction, send a modification instruction to the decoding device 104, and the decoding device 104 may destroy the newly added layer or change the current layer based on the modification instruction, so as to restore the target window to the state in which the images linked with the auxiliary number of alarm messages and the image linked with the target alarm message are displayed in a plurality of sub-windows of the target window.

Step 414: detecting whether there are display windows satisfying the target condition in the display screen. When there are the display windows satisfying the target condition in the display screen, step 415 is performed; when there is no display window satisfying the target condition in the display screen, step 417 is performed.

Wherein the target condition includes that a priority level corresponding to the alarm message linked with the displayed image is less than or equal to a priority level corresponding to the target alarm message.

If the control apparatus determines in step 408 that the auxiliary number corresponding to each of all display windows in the display screen is equal to the number threshold, the control apparatus may determine that there is no display window, to which further alarm messages can be added, in the display screen, and the control apparatus may further detect to determine whether there is the target window. For example, the control apparatus may detect whether there is a display window that satisfies a further target condition, and the target condition includes that the priority level corresponding to the alarm message linked with the image displayed in the display window is less than or equal to the priority level corresponding to the target alarm message. Alternatively, each alarm message may have a corresponding priority level, the higher priority level indicates that the alarm message is of higher importance, and an alarm message with a higher priority level among the plurality of alarm messages needs to be processed firstly. The control apparatus may compare the priority level of an alarm message corresponding to each display window with the priority level of the target alarm message, to detect whether there is a display window that satisfies a target condition among the various display windows of the display screen, wherein the target condition includes that the priority level corresponding to the alarm message is less than or equal to the priority level of the target alarm message. It should be noted that, for ease of description, a priority level corresponding to an alarm message is hereinafter referred to directly as a priority level of an alarm message.

Alternatively, for each display window, the control apparatus may determine the priority level of each alarm message corresponding to the display window, compare the priority level of each alarm message with the priority level of the target alarm message to determine all alarm messages in the display window whose priority levels are less than or equal to the priority level of the target alarm message, and then determine the display window as a display window satisfying the target condition. Alternatively, for each display window, the control apparatus may also directly determine the display window as a display window satisfying the target condition when determining that the priority level of any alarm message is less than or equal to the priority level of the target alarm message, and stop determining the priority level of the other alarm messages that have not been determined.

Alternatively, the control apparatus may traverse each display window in the display screen, i.e., detect all display windows in the display screen, to determine all display windows that satisfy the target condition. Alternatively, after detecting a display window that satisfies the target condition, even if there are other display windows that are not detected, the control apparatus may no longer detect the other display windows. Alternatively, the control apparatus may also detect, in a certain detection order, whether each display window of the display screen satisfies the target condition. Regarding the detection order, please refer to the introduction for the detection order in step 403, and the embodiment of the present application will not repeat the details. Alternatively, with respect to the unlocked display window, the control apparatus may detect whether it satisfies the target condition. The unlocked display window has been determined after step 406, and the detection can be performed directly on the unlocked display window in step 414, without determining which display window is the unlocked display window. With respect to the locked display window, reference may also be made to the relevant descriptions in steps 403 and 406, which is not repeated in the embodiments of the present application.

Alternatively, step 414 may specifically be performed by a server 1021 in the monitoring system 10 shown in FIG. 2. The server 1021 may determine the priority level of the alarm message corresponding to each display window in the display screen 101 and determine whether there are display windows that satisfies the target condition.

Step 415: determining a target window among the display windows that satisfy the target condition. Step 416 is performed.

It should be noted that the manner in which the control apparatus determines the target window among the display windows that satisfy the target condition can be referred to the manner for determining the target window in steps 404 and 406, and the embodiment of the present application will not repeat the details. Alternatively, if the control apparatus determines a plurality of display windows satisfying the target condition in the display screen in step 414, a display window corresponding to the alarm message with the lowest priority level among the plurality of display windows may be determined as the target window. Alternatively, step 415 may specifically be performed by the server 1021 in the monitoring system 10 shown in FIG. 2. It is noted that there is a display window satisfying the target condition which corresponds to an alarm message with a priority level lower than or equal to the priority level of the target alarm message. By determining the target window for displaying the image linked with the target alarm message among the display windows satisfying the target condition, replacing the image linked with the alarm message with a higher priority can be avoided, to ensure that the display screen gives priority to the display of the image linked with the alarm message with a higher priority, and ensure that the staff can give priority to the more important alarm events.

Step 416: controlling the display screen to display the image captured in real time by at least one monitoring point linked with the target alarm message in a region, for displaying an auxiliary image, of the target window, wherein the priority level corresponding to an alarm message linked with the auxiliary image is less than or equal to the priority level corresponding to the target alarm message.

Exemplarily, the display window satisfying the target condition corresponds to a plurality of alarm messages, the display window satisfying the target condition includes a plurality of sub-windows, and the image linked with each of the alarm messages may be displayed in one of the sub-windows. The region in which the auxiliary image is displayed is one of the sub-windows in the target window. The control apparatus may determine a sub-window whose corresponding alarm message has the priority level less than or equal to the priority level of the target alarm message, and then replace an image originally displayed in the sub-window with the image linked with the target alarm message, and the image originally displayed in the sub-window is the auxiliary image. It should be noted that the mode of displaying, in the sub-window, the image captured in real time by the at least one monitoring point linked with the target alarm message can be referred to the display mode of the image linked with the target alarm message in step 410, i.e., the images captured in real time by individual monitoring points are displayed in turn, which is not repeated in the embodiments of the present application.

Alternatively, for the target window, after determining that the priority level of an alarm message is less than or equal to the priority of the target alarm message, the control apparatus may then directly determine an image linked with the alarm message as the auxiliary image. Alternatively, the control apparatus may determine an image linked with an alarm message with the lowest priority level in the target window as the auxiliary image. Alternatively, the control apparatus may determine any alarm message with a priority level less than or equal to the priority level of the target alarm message and determine an image linked with the alarm message as the auxiliary image. Alternatively, if, in step 414, the control apparatus determines that the priority level of an alarm message is less than or equal to the priority level of the target alarm message, the control apparatus directly determines a display window corresponding to the alarm message as the display window satisfying the target condition, and no longer detects other display windows, and no longer detects any other alarm messages corresponding to the display window; in step 416, the control apparatus may directly replace an image in a sub-window corresponding to this alarm message with the image linked with the target alarm message.

Alternatively, specifically, in step 416, an identifier of the target window, an identifier of a sub-window, where the auxiliary image is located, in the target window, and an image captured in real time by the at least one monitoring point linked with the target alarm message may be sent to the decoding device 104 by the server 1021 in the monitoring system 10 of FIG. 2. Based on the received information, the decoding device 104 controls the display screen 101 to display, in the sub-window in the target window where the auxiliary image is located, the image captured in real time by the at least one monitoring point linked with the target alarm message.

Step 417: recording the target alarm message.

When the control apparatus determines in step 414 that there is no display window in the display screen that satisfies the target condition, the control apparatus may determine that the target alarm message is of low importance, and therefore the alarm event corresponding to the target alarm message may not be processed first, and thus the image captured by the monitoring point linked with the target alarm message may not be displayed first. For example, the control apparatus may record the target alarm message, such that the staff process the alarm event corresponding to the target alarm message after the staff has processed a more important alarm event. For example, the staff may pre-set a storage space for storing alarm messages that have not been processed, such as alarm messages with which the images captured in real time by the monitoring points linked have not been displayed. Alternatively, the storage space may be an information queue, and each alarm message can be sequentially stored in the information queue according to storage time. The information queue may follow a first-in-first-out principle, that is, the alarm message stored first may be processed first.

Alternatively, the staff may actively process the unprocessed alarm messages recorded in the storage space, e.g., the staff may, via the management terminal, actively control the display screen to display images captured in real time by the monitoring points linked with the unprocessed alarm messages. Alternatively, the control apparatus may monitor the display state of the display screen, and after determining that the alarm message linked with an image displayed in the display screen has been changed, for example, a certain alarm message has been revoked, resulting in that the display screen stops displaying the image linked with the alarm message, the control apparatus then executes the method provided by embodiments of the present application for displaying the image captured in real time by the monitoring point linked with the unprocessed alarm message. Exemplarily, an alarm message being revoked may refer to a situation in which the staff manually triggers, after processing an alarm event corresponding to the alarm message, the display screen to stop displaying an image linked with the alarm message; or may also refer to a situation in which the display of an image linked with the alarm device automatically stops after a display duration of the image reaches a set duration. Alternatively, the control apparatus may process the alarm messages recorded in the storage space at a certain time interval. Exemplarily, each image linked with the alarm message is displayed according to a set display duration, and the display of the image stops when the display duration is reached. After recording the alarm messages in the storage space, the control apparatus may determine that the display screen stops displaying an image linked with a certain alarm message after, at most, the display duration, and further the control apparatus may process the unprocessed alarm messages recorded in the storage space after the display duration. Alternatively, the control apparatus may sequentially process alarm messages recorded in the storage space in an order in which the alarm messages are stored; or may also sequentially process alarm messages recorded in the storage space in an order of priority levels of the alarm messages; or may also randomly process alarm messages recorded in the storage space, which is not limited by the embodiments of the present application. Alternatively, after the unprocessed alarm messages recorded in the storage space are processed, the control apparatus may delete the alarm messages from the storage space.

Alternatively, in the embodiment of the present application, the image captured in real time by the monitoring point linked with the alarm message may correspond to a certain dwell duration (i.e., the above set display duration), and the display of the image captured in real time by the monitoring point is stopped after the display duration of the image reaches the dwell duration. This can avoid a situation in which the staff forgets to close the display of the image linked with the alarm message in the display screen after processing the alarm event corresponding to the alarm message, resulting in a waste of display resources of the display screen. It can also facilitate the timely processing of unprocessed alarm messages recorded in the storage space, avoiding the display screen being occupied by a certain alarm message for a long time. Alternatively, various alarm messages may correspond to the same dwell duration, or may also correspond to different dwell durations, which is not limited by the embodiments of the present application. The staff may configure the dwell duration corresponding to the alarm device on the management terminal, such as on a web client of the management terminal, and store information of the configured dwell duration in the server.

Exemplarily, after receiving the target alarm message, the control apparatus may obtain the dwell duration corresponding to the target alarm message. After the display duration of the image captured in real time by the at least one monitoring point linked with the target alarm message reaches the dwell duration, the display screen is controlled to stop displaying the image captured in real time by the at least one monitoring point. Alternatively, for the monitoring system shown in FIG. 2, specifically, the display duration of the image captured in real time by the monitoring point 103 linked with the target alarm message may be determined by the server 1021. When determining that the display duration reaches the dwell duration, the server 1021 sends a stop-display instruction to the decoding device 104, and the decoding device 104 may, based on the stop-display instruction, control the display screen 101 to stop displaying the image captured in real time by the monitoring point 103 linked with the target alarm message.

Alternatively, in the embodiment of the present application, the control apparatus may also control, during the display of the image captured in real time by the at least one monitoring point linked with the target alarm message, the display screen to display a flashing border in the display area of the image captured in real time by the at least one monitoring point. In this way, the attention of the staff to the target alarm message can be enhanced, and the staff can then give priority to the processing of the alarm event corresponding to the target alarm message, ensuring the processing efficiency of the alarm message in the monitoring system. Exemplarily, if the image linked with the target alarm message is titled in the target window, the flashing border may be displayed at an edge of the target window. If the image linked with the target alarm message is displayed in a sub-window of the target window, the blinking border may indicate an edge of the sub-window. Alternatively, the color of the border may be an eye-catching color, such as red, yellow or other colors, which is not limited by the embodiments of the present application. Alternatively, the colors of the borders displayed at edges of the images linked with different alarm messages may be different, for example, the color of the border may be determined based on the priority level of the corresponding alarm message, and the color of the border displayed around the image linked with the alarm message with the higher priority level the is more eye-catching. Alternatively, a display duration of the flashing border may be less than or equal to a duration threshold. Exemplarily, the duration threshold may be 15 seconds, or may also be 10 seconds or other durations, which is not limited by the embodiments of the present application. The duration threshold may be configured by the staff via the management terminal.

Exemplarily, the control apparatus may process a specified number of frames of images every a target number of frames of images, in the images captured in real time by the monitoring point, so that the specified number of frames of images carry border information, for example red borders may be added to the edges of the specified number of frames of images. In this way, images in a video stream are superimposed with red borders at intervals, which in turn can achieve the effect of displaying blinking borders during the playback of the video stream. For example, if the target number of frames and the specified number of frames are both 5, the control apparatus may add border information to the following five frames of images every five frames. Alternatively, the target number of frames and the specified number of frames may also be other values, and the target number of frames and the specified number of frames may also be unequal, which is not limited by the embodiments of the present application. Alternatively, for the monitoring system 10 shown in FIG. 2, the server 1021 may send to the decoding device 104 the image captured in real time by at least one monitoring point linked with the target alarm message, and the decoding device 104 may superimpose the border information on the received images, thereby controlling the display screen to display the images superimposed with the border information.

Alternatively, in the embodiment of the present application, after receiving the target alarm message, the control apparatus may also send the target alarm message to the management terminal. The target alarm message may correspond to a management terminal that has management authority over the target alarm message, and the control apparatus may send the target alarm message to the management terminal. Alternatively, the management terminal may be a management terminal where the CS client is located. Exemplarily, the management terminal may display a mirrored window corresponding to the display screen, i.e., display windows corresponding to display windows in the display screen. Alternatively, the control apparatus may also send an identifier of the target window to the management terminal after determining the target window, e.g., the identifier of the target window includes a position of the target window in the display screen. An alarm identifier may be displayed in a display window corresponding to the target window on the management terminal to alert the staff to the target alarm message, as well as to identify a display position in the display screen of an image linked with the target alarm message. Alternatively, the control apparatus may also send to the management terminal an identifier of each monitoring point linked with the target alarm message. The display window on the management terminal corresponding to the target window may also display the name of the alarm event, as well as the identifier of the monitoring point linked with the target alarm message.

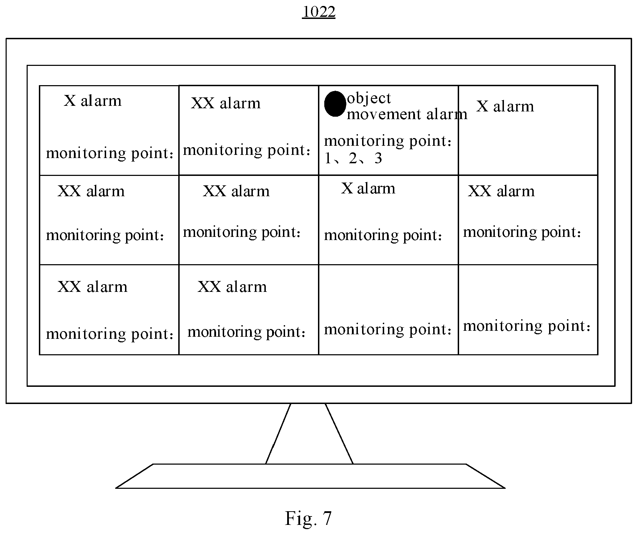

Exemplarily, FIG. 7 is a schematic diagram of a display interface of a management terminal provided by an embodiment of the present application. As shown in FIG. 7, 12 display windows corresponding to various display windows in the display screen shown in FIG. 2 may be displayed in the management terminal. Assuming a display window numbered 2 in the display screen, i.e., the third display window in the first row is the target window, an alarm identifier may be displayed in the third display window in the first row in the management terminal. Exemplarily, the alarm identifier may be a red circular icon. A name of an alarm event corresponding to the target alarm message, such as "object movement alarm", can be displayed in the display window. Identifiers of the monitoring points linked with the target alarm message, such as monitoring points 1, 2, and 3, may also be displayed in the display window.

Alternatively, after the display mode of the image in the target window, the control apparatus may also send information of the display mode to the management terminal. For example, the information of the display mode may include the manner for dividing the target window into sub-windows, and correspondences between the various monitoring points and the sub-windows. Alternatively, the information of the display method may also be displayed in a display window on the management terminal corresponding to the target window. Exemplarily, when the target window is divided into a plurality of sub-windows, information of the sub-windows may also be displayed in the display window on the management terminal corresponding to the target window. For example, the display window may also be divided into a plurality of sub-windows based on the manner for dividing the target window into sub-windows, and the information of the monitoring point corresponding to each sub-window may be displayed in the sub-window; or the manner for dividing the target window into the sub-windows and the information of the monitoring point corresponding to each sub-window may be indicated in the display window in the form of text. Alternatively, the control apparatus may also send an alarm end message to the management terminal after the display duration of the image captured in real-time by the monitoring point linked with the target alarm message on the display screen reaches a dwell duration, and the management terminal may stop displaying the alarm identifier based on the alarm end message. The displaying of the alarm event name and the identifier of the monitoring point may also be stopped.

Alternatively, the staff may pre-configure a management terminal that has management authority over the target alarm message. When configuring, the staff may directly enter, on the management terminal, an identifier of the management terminal corresponding to the target alarm message, so as to store a correspondence between the target alarm message and the identifier of the management terminal in the server. Alternatively, the staff may enter a user account, and the control apparatus, after receiving the target alarm message, may determine the terminal logged in with an user account as the management terminal that has management authority over the target alarm message. Alternatively, after the management terminal receives the target alarm message, the staff may also perform other operations on the management terminal, such as playing back the images captured by monitoring points linked with the target alarm message, recording the images captured by monitoring points, and the like.

It should be noted that the embodiments of the present application are presented only by way of an example of the execution order of the individual steps in FIG. 4. Whether the individual steps in FIG. 4 are executed and the execution order of the individual steps when executing, can be adjusted accordingly for different scenarios. Several other optional examples are described below:
Exemplarily, the control apparatus may first detect whether there are display windows in which the image linked with the alarm message is not displayed, and after determining that there are display windows in which the image linked with the alarm message is not displayed, determine a display window in which no image is displayed among the display windows. That is, before executing step 403, the step of detecting whether the image linked with the alarm message is not displayed in the display windows may be performed, and in such case step 406 may not be performed. Also exemplarily, in step 406, when it is determined that the images displayed in all display windows of the display screen are linked with the alarm messages, it may be directly determined that there is no target window, that supports displaying the image captured in real time by the monitoring point linked with the target alarm message, in the display screen, and thus step 417 may be directly executed without executing step 408 and subsequent steps thereafter. Further exemplarily, when it is determined in step 408 that the auxiliary number corresponding to each of the display windows in the display screen is equal to the number threshold, it can be directly determined that there is no target window, that supports displaying the image captured in real time by the monitoring point linked with the target alarm message, in the display screen, and thus step 417 may be directly executed without executing step 414 and subsequent steps thereafter. Also exemplarily, when the target window corresponds to a plurality of alarm messages, the images linked with the individual alarm message in the target window can only be displayed in turn in the sub-windows and cannot be titled in the target window, and steps 411 to step 413 may also not be executed.

It should be noted that the embodiment of the present application takes as an example that the target condition that the target window satisfies includes: no image is displayed, an image is displayed and the displayed image is not linked with any alarm message, the number of alarm messages linked with the image currently displayed in the display window is less than the number threshold, and the priority level corresponding to the alarm message linked with the image displayed in the display window is less than or equal to the priority level corresponding to the target alarm message. The control apparatus prioritizes selecting of a display window that satisfies the top target condition in the sequence of target conditions as the target window. Alternatively, the control apparatus may also not prioritize the four conditions, and the control apparatus may directly determine a display window as the target window when determining that the display window satisfies any of the four conditions. Alternatively, the control apparatus may also determine the target window based on only one of the four conditions. Exemplarily, the control apparatus may determine the target window only among display windows in which no image is displayed. Alternatively, the control apparatus may determine the target window among display windows in which images are displayed and the displayed images are not linked with any alarm message, and the control apparatus does not consider display windows in which no image is displayed even if there are such display windows in which no image is displayed. Alternatively, it is also possible to determine the target window directly among the display windows whose corresponding auxiliary number is less than the number threshold, or it is also possible to determine the target window directly among the display windows which satisfy the target condition, which is not limited by the embodiments of the present application.

Alternatively, in this embodiment of the present application, the staff may also configure profiles, and the control apparatus may also look up a profile corresponding to the alarm message after receiving the alarm message, so as to determine a display mode of the images captured in real time by the monitoring points in the display screen. Alternatively, the staff may make a configuration on the management terminal to instruct the control apparatus to determine, after receiving the alarm message, the display mode of the image captured in real time by each monitoring point linked with that alarm message. That is, it is determined whether to use the display mode shown in FIG. 4 or to display the image captured in real time by each monitoring point based on the configured profiles. In this way, the flexibility of the display screen for displaying the images linked with the alarm messages can be improved.

Exemplarily, the staff may pre-configure a profile corresponding to each alarm message, and the profile includes an identifier of the monitoring point linked with the alarm message, and a display position of the image captured by each monitoring point in the display screen. For example, the staff may configure a profile for each type of alarm message, or may also configure a profile for a specific alarm message of each alarm device, or may also configure a profile for each alarm device, which is not limited by the embodiments of the present application. Alternatively, the staff may also first configure a plurality of profiles that are not bound to alarm events, and each of the profiles may correspond to the number of monitoring points, the profile may include, when the alarm message is linked with the number of monitoring points, the display position of the image captured in real time by each of the monitoring points in the display screen. Then, the staff may bind each alarm event to one of the configured profiles. In the process of configuring the profiles, the staff may set the dwell duration of the image captured in real time by the monitoring point linked with the alarm event. When the control apparatus receives the target alarm message, the control apparatus may select a profile corresponding to the target alarm message among the configured profiles, and then control, based on the profile, the display screen to display the image captured in real time by the monitoring point at the corresponding position. In this manner, the control apparatus can still send the target alarm message to the authorized management terminal, and the display mode of the management terminal can be referred to the above relevant introduction, which will not be repeated in the embodiments of this application. When the display duration of the image captured in real time by the monitoring point reaches the dwell duration, the control apparatus can control the display screen to stop displaying the image. In this way, a complete process of alarm event linked with the profile on the wall is realized.

In summary, in the embodiment of the present application, after receiving the alarm message, the control apparatus can determine, based on the current usage of each display window in the display screen, the target window for displaying images captured by monitoring points linked with the alarm message. In this way, it is not necessary for the staff to pre-configure alarm profiles corresponding to various alarm messages, to determine the display location of the image captured by each monitoring point, which simplifies the process of displaying the images captured by the monitoring points linked with the alarm message, and further, since the display position of the image captured by each monitoring point is not fixed, the display flexibility is improved.

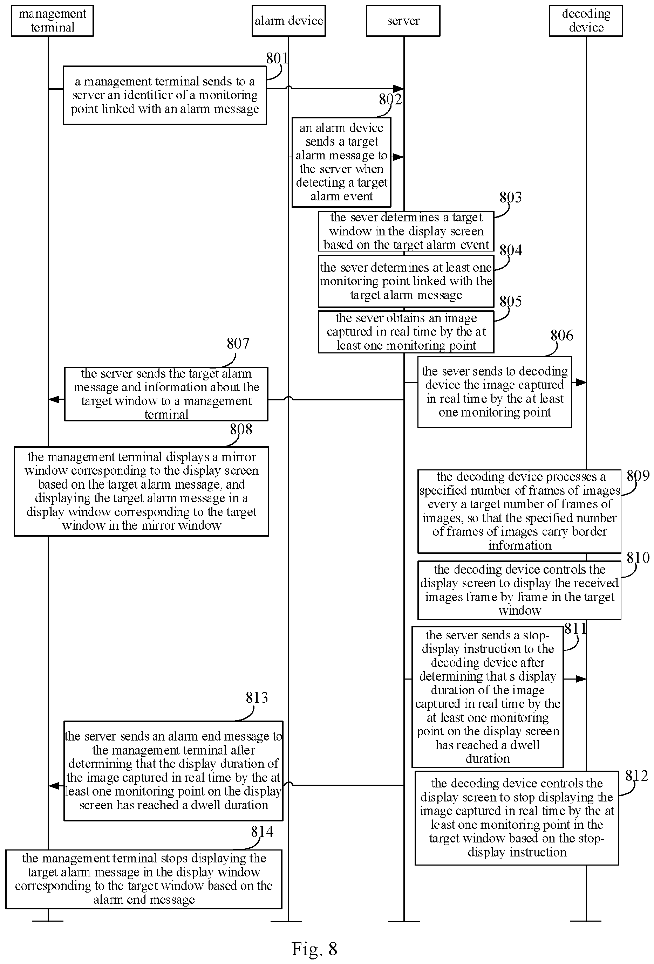

It should be noted that the above contents only introduce the control method for the display screen provided in the embodiments of the present application with respect to the control apparatus. The following describes the control method for the display screen provided by the embodiments of the present application with respect to the interaction of the individual devices in the monitoring system 10. FIG. 8 is a flowchart of a further method for controlling a display screen provided by an embodiment of the present application. The method may be used for the monitoring system 10 shown in FIG. 2. As shown in FIG. 8, the method may include:
Step 801: a management terminal sends to a server an identifier of a monitoring point linked with an alarm message.

Exemplarily, a staff may configure the monitoring point linked with the alarm message based on the web client. The management terminal where the web client is located may send to the server the identifier of the monitoring point linked with each alarm message. Accordingly, the server may receive the identifier of the monitoring point linked with each alarm message send from the management terminal, and record the alarm message and the identifier of the monitoring point linked with the alarm message. Further, the server may be informed that the alarm message is also linked with the image captured in real times by the monitoring point; and upon receiving a certain alarm message, the sever shall obtain the image captured in real time by the monitoring point linked with the alarm message and control the display screen to display the image.

Step 802: an alarm device sends a target alarm message to the server when detecting a target alarm event.

Accordingly, the server receives the target alarm message sent by the alarm device. It should be noted that step 802 can be referred to the relevant introduction of step 401, which is not repeated in the embodiment of the present application.

Step 803: the sever determines a target window in the display screen based on the target alarm event.

It should be noted that the specific process of determining the target window can be referred to the introduction of determining the target window in steps 403 to 415, which is not repeated in the embodiment of the present application.

Step 804: the sever determines at least one monitoring point linked with the target alarm message.

Exemplarily, the server may determine the at least one monitoring point linked with the target alarm message from correspondences between alarm messages and monitoring points recorded by the sever.

Step 805: the sever obtains an image captured in real time by the at least one monitoring point.

Exemplarily, the server may send a video upload instruction to the at least one monitoring point to instruct the at least one monitoring point to send the image captured in real time to the server. Alternatively, each monitoring point may continuously upload the captured images to the cloud platform, which may store all the received data. The server, after determining the at least one monitoring point, may obtain the image captured in real time by the at least one monitoring point from the cloud platform.

Step 806: the sever sends to decoding device the image captured in real time by the at least one monitoring point.

Exemplarily, the server, after obtaining the image captured in real time by the at least one monitoring point, may send the obtained image to the decoding device. Accordingly, the decoding device may receive the image captured in real time by the at least one monitoring point.

Step 807: the server sends the target alarm message and information about the target window to a management terminal.

Exemplarily, the target alarm message may correspond to a management terminal having management authority over the target alarm message, and the control apparatus may send the target alarm message as well as the information about the target window to the management terminal. The information about the target window may include an identifier of the target window, such as a position of the target window in the display screen.

Step 808: the management terminal displays a mirror window corresponding to the display screen based on the target alarm message, and displaying the target alarm message in a display window corresponding to the target window in the mirror window.

It should be noted that step 808 may be referred to the relevant introduction regarding the management terminal displaying information in FIG. 4, which is not repeated in the embodiment of the present application.

Step 809: the decoding device processes a specified number of frames of images every a target number of frames of images, so that the specified number of frames of images carry border information.

It should be noted that step 809 can be referred to the relevant description regarding the blinking border in Fig. 4, which will not be repeated in the embodiment of the present application.

Step 810: the decoding device controls the display screen to display the received images frame by frame in the target window.

It should be noted that the manner for displaying the images in the target window can be referred to the relevant description of step 405, step 410 to step 413, and step 416 in FIG. 4, which is not repeated in the embodiment of the present application.

Step 811: the server sends a stop-display instruction to the decoding device after determining that s display duration of the image captured in real time by the at least one monitoring point on the display screen has reached a dwell duration.

Step 812: the decoding device controls the display screen to stop displaying the image captured in real time by the at least one monitoring point in the target window based on the stop-display instruction.

Step 813: the server sends an alarm end message to the management terminal after determining that the display duration of the image captured in real time by the at least one monitoring point on the display screen has reached a dwell duration.

Step 814: the management terminal stops displaying the target alarm message in the display window corresponding to the target window based on the alarm end message.

It should be noted that step 814 can be referred to the specific description of the management terminal in FIG. 4, which will not be repeated in the embodiment of the present application.

In summary, in the embodiment of the present application, after receiving the alarm message, the server can determine a target window for displaying the images captured by the monitoring points linked with the alarm message based on the current usage of each display window in the display screen, and then control via the decoding device the display screen to display the images in the target window. In this way, it is not necessary for the staff to pre-configure alarm profiles corresponding to various alarm messages, to determine the display location of the image captured by each monitoring point, which simplifies the process of displaying the images captured by the monitoring points linked with the alarm message, and further, since the display position of the image captured by each monitoring point is not fixed, the display flexibility is improved.

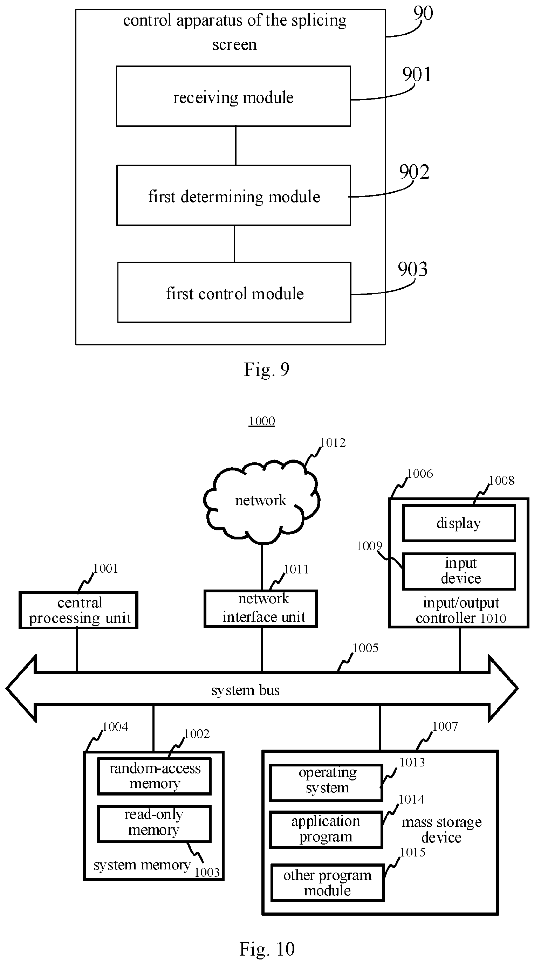

FIG. 9 is a schematic structure diagram a control apparatus for a display screen improved by an embodiment of the present application. The control apparatus may be used for the server 1021, or the server 1021 and the decoding device 104 in FIG. 2. As shown in FIG. 9, the control apparatus 90 may include:
a receiving module 901, configured for receiving a target alarm message, wherein the target alarm message is linked with an image captured in real time by at least one monitoring point;
a first determining module 902, configured for determining, based on display states of a plurality of display windows in the display screen, a target window that supports displaying the image linked with the target alarm message among the plurality of display windows, wherein the target window includes at least one of the display windows; and
a first control module 903, configured for controlling the display screen to display in the target window the image captured in real time by the at least one monitoring point.

In summary, in the embodiment of the present application, after receiving the alarm message, the control apparatus can determine a target window for displaying images captured by monitoring points linked with the alarm message based on the current usage of each display window in the display screen. In this way, it is not necessary for the staff to pre-configure alarm profiles corresponding to various alarm messages, to determine the display location of the image captured by each monitoring point, which simplifies the process of displaying the images captured by the monitoring points linked with the alarm message, and further, since the display position of the image captured by each monitoring point is not fixed, the display flexibility is improved.

Alternatively, the first determining module 902 is further configured for:
when there are display windows in which no image is displayed among the plurality of display windows, determining the target window among the display windows in which no image is displayed.

Alternatively, the first determining module 902 is further configured for:
when the plurality of display windows are all displaying images and there are display windows in which displayed images are not linked with any alarm message among the plurality of display windows, determining the target window among the display windows in which displayed images are not linked with any alarm message.

Alternatively, the first determining module 902 is further configured for:
when the plurality of display windows are all displaying images and images displayed in the plurality of display windows are all linked with alarm messages, detecting whether there are display windows whose corresponding auxiliary number is less than a number threshold among the plurality of display windows, wherein the auxiliary number is the number of alarm messages linked with an image displayed in a display window; and
when there are the display windows whose corresponding auxiliary number is less than the number threshold among the plurality of display windows, determining the target window among the display windows whose auxiliary number is less than the number threshold.

Alternatively, the auxiliary number is n, and the first control module 903 includes:
a division unit, for dividing the target window into m sub-windows based on the auxiliary number, wherein 2 <, n + 1 <, m, and m is less than or equal to the number threshold; and
a control unit, for controlling the display to display images linked with the auxiliary number of alarm messages and the image linked with the target alarm message in n+1 of the m sub-windows, respectively.

Alternatively, the control unit is further for:
when there is any alarm message linked with images captured in real time by a plurality of monitoring points in the auxiliary number of alarm messages and the target alarm message, controlling the display screen to display the images captured in real time by the plurality of monitoring points in turn in a sub-window corresponding to the any alarm message.

Alternatively, each alarm message has a corresponding priority level; and the first determination module 902 is further configured for:
when the auxiliary number corresponding to each of the plurality of display windows is equal to the number threshold, detecting whether there are display windows that satisfy a target condition among the plurality of display windows, wherein the target condition includes a priority level corresponding to the alarm message linked with the displayed image being less than or equal to a priority level corresponding to the target alarm message; and
when there are display windows that satisfy the target condition among the plurality of display windows, determining the target window among the display windows that satisfy the target condition.

Alternatively, the first control module 903 is further configured for:
controlling the display screen to display the image captured in real time by the at least one monitoring point in a region, for displaying an auxiliary image, of the target window; wherein a priority level corresponding to an alarm message linked with the auxiliary image is less than or equal to the priority level corresponding to the target alarm message.

Alternatively, the control apparatus 90 further includes:
a second control module, configured for controlling, in case any window of the display screen includes a plurality of sub-windows respectively displaying images linked with a plurality of alarm messages, and after an unfolding instruction for any alarm message of the plurality of alarm messages is received, the display screen to suspend an auxiliary window in the any window, wherein the auxiliary window has an area larger than that of sub-windows displaying images linked with the any alarm message; wherein the any window includes at least one of the display windows, the any alarm message is linked with images captured in real time by b monitoring points, and the auxiliary window includes a sub-windows, 1 ^b^a; and
a third control module, configured for controlling the display screen to display the images captured in real time by the b monitoring points in b sub-windows of the a sub-windows, respectively.

Alternatively, the control apparatus 90 further includes:
a restoring module, configured for after receiving a folding instruction for the any alarm message, controlling the display screen to stop displaying the auxiliary window, so as to restore displaying the images linked with the plurality of alarm messages in a plurality of sub-windows in the any window, respectively.

Alternatively, the first determining module 902 is further configured for:
when there is a locked display window among the plurality of display windows, determining the target window among display windows other than the locked display window, wherein an image source of an image displayed in the locked display window is prohibited from being changed.

Alternatively, the first determining module 902 is further configured for:
when a window, that supports displaying the image linked with the target alarm message, of the plurality of display windows includes a splicing window, determining the splicing window as the target window, wherein the splicing window consists of a plurality of adjacent display windows.

Alternatively, the first determining module 902 is further configured for:
determining an detection order of the plurality of display windows;
sequentially detecting, in the detection order, whether each of the plurality of display windows supports displaying the image linked with the target alarm message;
after determining that any of the display windows supports displaying the image linked with the target alarm message, determining the any of the display windows as the target window and stopping detecting display windows after the any of the display windows.

Alternatively, the first control module 903 is further configured for:
dividing the target window into a plurality of sub-windows, wherein the number of the sub-windows is greater than or equal to the number of the at least one monitoring point; and
controlling the display screen to display the image captured in real time by the at least one monitoring point in at least one of the plurality of sub-windows, respectively.

Alternatively, the control apparatus 90 further includes:
an obtaining module, configured for obtaining a dwell duration corresponding to the target alarm message;
a stopping module, configured for controlling the display screen to stop displaying the image captured in real time by the at least one monitoring point after a display duration of the image captured in real time by the at least one monitoring point reaches the dwell duration.

Alternatively, the control apparatus 90 further includes:
a fourth control module, configured for controlling the display screen to display a blinking border in a display area of the image captured in real time by the at least one monitoring point during displaying of the image captured in real time by the at least one monitoring point.

Alternatively, the display screen is a splicing screen which is formed by splicing a plurality of liquid crystal screens, and the control apparatus further includes: a second determining module configured for taking a display area of each liquid crystal screen in the plurality of liquid crystal screens as one of the display window;
or, the display screen consists of at least one light emitting diode screen, and the control apparatus further including: an obtaining module configured for obtaining a window division template; and a division module configured for dividing the display screen into a plurality of display windows based on the window division template.

In summary, in the embodiment of the present application, after receiving the alarm message, the control apparatus can determine the target window for displaying images captured by monitoring points linked with the alarm message based on the current usage of each display window in the display screen. In this way, it is not necessary for the staff to pre-configure alarm profiles corresponding to various alarm messages, to determine the display location of the images captured by each monitoring point, which simplifies the process of displaying the images captured by the monitoring points linked with the alarm message, and further, since the display position of the image captured by each monitoring point is not fixed, the display flexibility is improved.

FIG. 10 is a structural block diagram of a control apparatus for a display screen provided by an embodiment of the present application. The control apparatus may be a server, the server 1000 includes a central processing unit (CPU) 1001, a system memory 1004 including a random-access memory (RAM) 1002 and a read-only memory (ROM) 1003, and a system bus 1005 connecting the system memory 1004 to the central processing unit 1001. The server 1000 further includes a basic input/output system (I/O system) 1006 that assists in transferring information between the various devices within the computer, and a mass storage device 1007 for storing the operating system 1013, the application program 1014, and other program module 1015.

The basic input/output system 1006 includes a display 1008 for displaying information and input device 1009 such as a mouse, keyboard, or the like for inputting information by the user. The display 1008 and the input device 1009 are both connected to the central processing unit 1001 via an input/output controller 1010 connected to the system bus 1005. The basic input/output system 1006 may also include an input-output controller 1010 for receiving and processing inputs from a plurality of other devices such as a keyboard, a mouse, or an electronic stylus. Similarly, the input/output controller 1010 also provides an output to the display screen, a printer, or other type of output devices.

The mass storage device 1007 is connected to the central processing unit 1001 via a mass storage controller (not shown) connected to the system bus 1005. The mass storage device 1007 and its associated computer readable media provide a non-volatile storage for the server 1000. That is, the mass storage device 1007 may include computer readable media such as a hard disc or a CD-ROM drive (not shown).

Without losing generality, the computer-readable medium may include a computer storage medium and a communication medium. The computer storage media includes volatile and non-volatile, removable and non-removable media implemented in any method or technique for storing information such as computer readable instructions, data structures, program modules or other data. The computer storage media includes RAMs, ROMs, EPROMs, EEPROMs, flash memories or other solid state storage devices, CD-ROMs, DVDs or other optical storage devices, tape cartridges, magnetic tapes, disk storage or other magnetic storage devices. Of course, those skilled in the art may know that the computer storage media are not limited to the above- mentioned ones. The system memory 1004 and mass storage device 1007 described above may be collectively referred to as the memory.

According to various embodiments of the present application, the server 1000 may also be connected to a remote computer on a network for operating via a network such as the Internet. That is, the server 1000 may be connected to a network 1012 via a network interface unit 1011 connected to the system bus 1005, or, may be connected to other types of networks or remote computer systems (not shown) using the network interface unit 1011 .

The memory further includes one or more programs which are stored in the memory, and the central processing unit 1001 implements the methods shown in Figs. 3, 4 or 8 by executing the one or more programs.

In exemplary embodiments, a control apparatus for a display screen is also provided. The control apparatus may include a processor and a memory, the memory has at least one instruction stored therein. The at least one instruction is configured to be executed by one or more processors to implement any of the above methods for controlling the display screen.

In exemplary embodiments, a computer-readable storage medium is also provided, wherein the storage medium has at least one instruction stored therein, the at least one instruction, when executed by a processor of a computer device, implements any of the above methods for controlling the display screen.

In exemplary embodiments, a computer program product containing instructions is also provided. When the computer program product is run on a computer, i.e., when the computer executes the instructions contained in the computer program product, the computer may implement any of the methods for controlling a display screen provided in the above method embodiments, such as the methods shown in FIG. 3, FIG. 4, or FIG. 8.

An embodiment of the present application also provides a chip including a programmable logic circuitry and/or program instructions, wherein when the chip runs, it implements the above method for controlling the display screen, such as the method shown in FIG. 3, FIG. 4, or FIG. 8.

It should be noted that the apparatus provided in the above embodiments is only illustrated by way of example with the division of each of the above functional modules, and alternatively, the above functions may be assigned to be performed by different functional modules as required, i.e. the internal structure of the apparatus is divided into different functional modules to complete all or part of the above-described functions.

In addition, the method embodiments provided in the embodiments of the present application can be mutually referenced with the corresponding apparatus embodiments, and the various method embodiments can also be mutually referenced with each other, and which is not limited by the embodiments of the present application. The sequence of the steps of the method embodiments provided in the embodiments of the present application can be adjusted appropriately, and the steps can be increased or decreased accordingly, and any skilled person familiar with the technical field, within the technical scope disclosed in the present application, can easily think of a change in the method, which should be covered by the scope of protection of the present application, and therefore will not be repeated.

In embodiments of the present application, the terms "first" and "second" are used for description only and are not to be understood as indicating or implying relative importance. The term "plurality" refers to two or more, unless otherwise expressly limited. The "including" mentioned in this application is an open term and should be interpreted as "including but not limited to". The term "and/or" in the present application is merely a description of the association relationship of the associated objects, indicating that three kinds of relationships may exist, for example, A and/or B, which may indicate that A alone exists, both A and B exist, and B alone exists. The term "at least one of A and B" in the present application is merely a description of the associative relationship of the associated objects, indicating that three kinds of relationships may exist, for example, at least one of A and B may indicate that A alone exists, both A and B exist, and B alone exists. Similarly, "at least one of A, B and C" indicating that seven kinds of relationships may exist, which can be expressed as: A alone exists, B alone exists, C alone exists, both A and B exist, both A and C exist, both C and B exist, both A, B and C exist, and so on.

The foregoing are only optional embodiments of this application and are not intended to limit this application, and any modifications, equivalent substitutions, improvements, etc. made within the spirit and principles of this application shall be included in the scope of protection of this application.

## Claims

1. A method for controlling a display screen, wherein the method comprises:
receiving a target alarm message, wherein the target alarm message is linked with an image captured in real time by at least one monitoring point;
determining, based on display states of a plurality of display windows in the display screen, a target window that supports displaying the image linked with the target alarm message among the plurality of display windows, wherein the target window comprises at least one of the display windows; and
controlling the display screen to display in the target window the image captured in real time by the at least one monitoring point.

2. The method according to claim 1, wherein the determining, based on display states of a plurality of display windows in the display screen, a target window that supports displaying the image linked with the target alarm message among the plurality of display windows, comprises:
when there are display windows in which no image is displayed among the plurality of display windows, determining the target window among the display windows in which no image is displayed; and
when the plurality of display windows are all displaying images and there are display windows in which displayed images are not linked with any alarm message among the plurality of display windows, determining the target window among the display windows in which displayed images are not linked with any alarm message.

3. The method according to claim 1 or 2, wherein the determining, based on display states of a plurality of display windows in the display screen, a target window that supports displaying the image linked with the target alarm message among the plurality of display windows, comprises:
when the plurality of display windows are all displaying images and images displayed in the plurality of display windows are all linked with alarm messages, detecting whether there are display windows whose corresponding auxiliary number is less than a number threshold among the plurality of display windows, wherein the auxiliary number is the number of alarm messages linked with an image displayed in a display window; and
when there are the display windows whose corresponding auxiliary number is less than the number threshold among the plurality of display windows, determining the target window among the display windows whose corresponding auxiliary number is less than the number threshold.

4. The method according to claim 3, wherein the auxiliary number is n, and the controlling the display screen to display in the target window the image captured in real time by the at least one monitoring point, comprises:
dividing the target window into m sub-windows based on the auxiliary number, wherein 2 <, n + 1 <, m, and m is less than or equal to the number threshold; and
controlling the display screen to display images linked with the auxiliary number of alarm messages and the image linked with the target alarm message in n+1 of the m sub-windows, respectively.

5. The method according to claim 4, wherein the controlling the display screen to display images linked with the auxiliary number of alarm messages and the image linked with the target alarm message in n+1 of the m sub-windows, respectively, comprises:
when there is any alarm message linked with images captured in real time by a plurality of monitoring points in the auxiliary number of alarm messages and the target alarm message, controlling the display screen to display the images captured in real time by the plurality of monitoring points in turn in a sub-window corresponding to the any alarm message.

6. The method according to claim 3, wherein each of the alarm messages has a corresponding priority level; and the determining, based on display states of a plurality of display windows in the display screen, a target window that supports displaying the image linked with the target alarm message among the plurality of display windows, further comprises:
when the auxiliary number corresponding to each of the plurality of display windows is equal to the number threshold, detecting whether there are display windows that satisfy a target condition among the plurality of display windows, wherein the target condition comprises a priority level corresponding to an alarm message linked with a displayed image being less than or equal to a priority level corresponding to the target alarm message; and
when there are display windows that satisfy the target condition among the plurality of display windows, determining the target window among the display windows that satisfy the target condition;
the controlling the display screen to display in the target window the image captured in real time by the at least one monitoring point, comprises:
controlling the display screen to display the image captured in real time by the at least one monitoring point in a region, for displaying an auxiliary image, of the target window; wherein a priority level corresponding to an alarm message linked with the auxiliary image is less than or equal to the priority level corresponding to the target alarm message.

7. The method according to any one of claims 1-2 and 4-6, wherein the method further comprises:
in case any window of the display screen comprises a plurality of sub-windows for respectively displaying images linked with a plurality of alarm messages, and after an unfolding instruction for any alarm message of the plurality of alarm messages is received, controlling the display screen to suspend an auxiliary window in the any window, wherein the auxiliary window has an area larger than that of sub-windows for displaying images linked with the any alarm message; wherein the any window comprises at least one of the display windows, the any alarm message is linked with images captured in real time by b monitoring points, and the auxiliary window comprises a sub-windows, 1≤b≤a;
controlling the display screen to display the images captured in real time by the b monitoring points in b sub-windows of the a sub-windows, respectively; and
after receiving a folding instruction for the any alarm message, controlling the display screen to stop displaying the auxiliary window, so as to restore displaying the images linked with the plurality of alarm messages in the plurality of sub-windows in the any window, respectively.

8. The method according to any one of claims 1-2 and 4-6, wherein the determining, based on display states of a plurality of display windows in the display screen, a target window that supports displaying the image linked with the target alarm message among the plurality of display windows, comprises:
when there is a locked display window among the plurality of display windows, determining the target window among display windows other than the locked display window, wherein an image source of an image displayed in the locked display window is prohibited from being changed;
and/or
when a window, that supports displaying the image linked with the target alarm message, of the plurality of display windows comprises a splicing window, determining the splicing window as the target window, wherein the splicing window consists of a plurality of adjacent display windows.

9. A method according to claim 1 or 2, wherein the controlling the display screen to display in the target window the image captured in real time by the at least one monitoring point, comprises:
dividing the target window into a plurality of sub-windows, wherein the number of the sub-windows is greater than or equal to the number of the at least one monitoring point; and
controlling the display screen to display the image captured in real time by the at least one monitoring point in at least one of the plurality of sub-windows, respectively;
and/or, the method further comprises:
obtaining a dwell duration corresponding to the target alarm message, controlling the display screen to stop displaying the image captured in real time by the at least one monitoring point after a display duration of the image captured in real time by the at least one monitoring point reaches the dwell duration; and/or, controlling the display screen to display a blinking border in a display area of the image captured in real time by the at least one monitoring point during displaying of the image captured in real time by the at least one monitoring point.

10. The method according to claim 1 or 2, wherein
the display screen is a splicing screen which is formed by splicing a plurality of liquid crystal screens, and the method further comprises: taking a display area of each liquid crystal screen in the plurality of liquid crystal screens as one of the display windows;
or, the display screen consists of at least one light emitting diode screen, and the method further comprises: obtaining a window division template; dividing the display into a plurality of display windows based on the window division template.

11. A control apparatus for a display screen, wherein the control apparatus comprises:
a receiving module, configured for receiving a target alarm message, wherein the target alarm message is linked with an image captured in real time by at least one monitoring point;
a first determining module, configured for determining, based on display states of a plurality of display windows in the display screen, a target window that supports displaying the image linked with the target alarm message among the plurality of display windows, wherein the target window comprises at least one of the display windows; and
a first control module, configured for controlling the display screen to display in the target window the image captured in real time by the at least one monitoring point.

12. The control apparatus according to claim 11, wherein the first determining module is further configured for:
when there are display windows in which no image is displayed among the plurality of display windows, determining the target window among the display windows in which no image is displayed;
wherein the first determining module is further configured for:
when the plurality of display windows are all displaying images and there are display windows in which displayed images are not linked with any alarm message among the plurality of display windows, determining the target window among the display windows in which displayed images are not linked with any alarm message;
wherein the first determining module is further configured for:
when the plurality of display windows are all displaying images and images displayed in the plurality of display windows are all linked with alarm messages, detecting whether there are display windows whose corresponding auxiliary number is less than a number threshold among the plurality of display windows, wherein the auxiliary number is the number of alarm messages linked with an image displayed in a display window; and
when there are the display windows whose corresponding auxiliary number is less than the number threshold among the plurality of display windows, determining the target window among the display windows whose corresponding auxiliary number is less than the number threshold;
wherein the auxiliary number is n, and the first control module comprises:
a division unit, for dividing the target window into m sub-windows based on the auxiliary number, wherein 2 <, n + 1 <, m, and m is less than or equal to the number threshold; and
a control unit, for controlling the display screen to display images linked with the auxiliary number of alarm messages and the image linked with the target alarm message in n+1 of the m sub-windows, respectively;
wherein the control unit is further for:
when there is any alarm message linked with images captured in real time by a plurality of monitoring points in the auxiliary number of alarm messages and the target alarm message, controlling the display screen to display the images captured in real time by the plurality of monitoring points in turn in a sub-window corresponding to the any alarm message;
wherein each of the alarm messages has a corresponding priority level; and the first determining module is further configured for:
when the auxiliary number corresponding to each of the plurality of display windows is equal to the number threshold, detecting whether there are display windows that satisfy a target condition among the plurality of display windows, wherein the target condition comprises a priority level corresponding to an alarm message linked with a displayed image being less than or equal to a priority level corresponding to the target alarm message; and
when there are display windows that satisfy the target condition among the plurality of display windows, determining the target window among the display windows that satisfy the target condition;
wherein the first control module is further configured for:
controlling the display screen to display the image captured in real time by the at least one monitoring point in a region, for displaying an auxiliary image, of the target window; wherein a priority level corresponding to an alarm message linked with the auxiliary image is less than or equal to the priority level corresponding to the target alarm message;
wherein the control apparatus further comprises:
a second control module, configured for controlling, in case any window of the display screen comprises a plurality of sub-windows for respectively displaying images linked with a plurality of alarm messages and after an unfolding instruction for any alarm message of the plurality of alarm messages is received, the display screen to suspend an auxiliary window in the any window, wherein the auxiliary window has an area larger than that of sub-windows for displaying images linked with the any alarm message; wherein the any window comprises at least one of the display windows, the any alarm message is linked with images captured in real time by b monitoring points, and the auxiliary window comprises a sub-windows, 1≤b≤ a; and
a third control module, configured for controlling the display screen to display the images captured in real time by the b monitoring points in b sub-windows of the a sub-windows, respectively;
wherein the control apparatus further comprises:
a restoring module, configured for controlling, after receiving a folding instruction for the any alarm message, the display screen to stop displaying the auxiliary window, so as to restore displaying the images linked with the plurality of alarm messages in the plurality of sub-windows in the any window, respectively;
wherein the first determining module is further configured for:
when there is a locked display window among the plurality of display windows, determining the target window among display windows other than the locked display window, wherein an image source of an image displayed in the locked display window is prohibited from being changed;
wherein the first determining module is further configured for:
when a window, that supports displaying the image linked with the target alarm message, of the plurality of display windows comprises a splicing window, determining the splicing window as the target window, wherein the splicing window consists of a plurality of adjacent display windows.
wherein the first determining module is further configured for:
determining an detection order of the plurality of display windows;
sequentially detecting, in the detection order, whether each of the plurality of display windows supports displaying the image linked with the target alarm message;
after determining that any of the display windows supports displaying the image linked with the target alarm message, determining the any of the display windows as the target window and stopping detecting display windows after the any of the display windows;
wherein the first control module is further configured for:
dividing the target window into a plurality of sub-windows, wherein the number of the sub-windows is greater than or equal to the number of the at least one monitoring point; and
controlling the display screen to display the image captured in real time by the at least one monitoring point in at least one of the plurality of sub-windows, respectively;
wherein the control apparatus further comprises:
an obtaining module, configured for obtaining a dwell duration corresponding to the target alarm message; and
a stopping module, configured for controlling the display screen to stop displaying the image captured in real time by the at least one monitoring point after a display duration of the image captured in real time by the at least one monitoring point reaches the dwell duration;
wherein the control apparatus further comprises:
a fourth control module, configured for controlling the display screen to display a blinking border in a display area of the image captured in real time by the at least one monitoring point during displaying of the image captured in real time by the at least one monitoring point;
wherein the display screen is a splicing screen which is formed by splicing a plurality of liquid crystal screens, and the control apparatus further comprises: a second determining module configured for taking a display area of each liquid crystal screen in the plurality of liquid crystal screens as one of the display windows;
or, the display screen consists of at least one light emitting diode screen, and the control apparatus further comprises: an obtaining module configured for obtaining a window division template; and a division module configured for dividing the display screen into a plurality of display windows based on the window division template.

13. A control apparatus for a display screen, comprising a processor and a memory, wherein the memory has at least one instruction stored therein, and the at least one instruction, when executed by the processor, implements the method for controlling a display screen as claimed in any one of claims 1 to 10.

14. A computer-readable storage medium, having at least one instruction stored therein, wherein the at least one instruction, when executed, implements the method for controlling a display screen as claimed in any one of claims 1 to 10.

15. A program product comprising instructions, wherein the computer program product, when run on a computer, causes the computer to implement the method for controlling a display screen as claimed in any one of claims 1 to 10.

16. A chip comprising programmable logic circuits and/or program instructions, wherein when the chip runs, it implements the method for controlling a display screen as claimed in any one of claims 1 to 10.
